## Europäisches Patentamt

## European Patent Office

## Office européen des brevets

(19)

(11) Veröffentlichungsnummer: **0 088 231**

**B1**

(12)

# EUROPÄISCHE PATENTSCHRIFT

(45) Veröffentlichungstag der Patentschrift:
**20.07.88**

(21) Anmeldenummer: **83100969.1**

(22) Anmeldetag: **02.02.83**

(51) Int. Cl.⁴: **B 23 K 11/30**, B 23 K 11/18

(54) **Elektrisches Widerstandspressschweissverfahren zum Verschweissen von aus Aluminiumwerkstoffen bestehenden Werkstückteilen und Einrichtung sowie Elektrode hierfür.**

(30) Priorität: **04.03.82 CH 1325/82**

(43) Veröffentlichungstag der Anmeldung:
**14.09.83 Patentblatt 83/37**

(45) Bekanntmachung des Hinweises auf die Patenterteilung:
**20.07.88 Patentblatt 88/29**

(84) Benannte Vertragsstaaten:
**AT BE CH DE FR GB IT LI LU NL SE**

(56) Entgegenhaltungen:
**CH-A-129 946**
**CH-A-595 177**
**DE-A-1 938 548**
**DE-A-2 641 016**
**DE-A-3 100 677**
**FR-A-519 053**
**FR-A-2 155 205**
**GB-A-2 049 524**
**US-A-2 322 101**
**US-A-2 379 187**
**US-A-3 487 191**

(73) Patentinhaber: **ELPATRONIC AG, Baarerstrasse 117, CH- 6300 Zug (CH)**

(72) Erfinder: **Urech, Werner, Rheingasse 28, CH- 8434 Kaiserstuhl (CH)**

(74) Vertreter: **Wuesthoff, Franz, Dr.- Ing., Patentanwälte Wuesthoff- v. Pechmann -Behrens- Goetz- v. Hellfeld Schweigerstrasse 2, D-8000 München 90 (DE)**

LIBER, STOCKHOLM 1988

**Beschreibung**

Die Erfindung bezieht sich auf ein elektrisches Widerstandspreßschweißverfahren zum Verschweißen von aus Aluminium und/oder dessen Legierungen bestehenden Werkstückteilen mit Hilfe eines über Elektroden zugeführten Schweißstromes, bei welchem die Werkstückteile vor Einschalten des Schweißstromes vorgepreßt werden und während des Stromflusses durch elastische Elektrodennachführung stetig ein auf die Werkstückteile wirkender Preßdruck aufrechterhalten wird. Die Erfindung bezieht sich ferner auf eine Einrichtung zur Durchführung dieses Verfahrens.

Verfahren dieser Art sind schon seit langer Zeit in Form des Punktschweißens und des Buckelschweißens von Aluminiumblechen bekannt, z. B. aus dem Lehrbuch "Technologie der Maschinenbaustoffe" von P. Schimpke, S. Hirzel Verlag Leipzig, 1949, S. 259. Diese bekannten Verfahren waren bisher immer mit Schwierigkeiten verbunden, deren Ursache in den Materialeigenschaften von Aluminiumwerkstoffen liegt, insbesondere in der oberflächlichen Oxidbildung und der relativ hohen elektrischen Leitfähigkeit und Wärmeleitfähigkeit von Aluminium und dessen Legierungen.

So ist auch in der neuesten Fachliteratur wie z. B. der Abhandlung "Buckelschweißen tiefziehfähiger Aluminiumwerkstoffe" in der Fachzeitschrift "Aluminium, 57 Jg., 1981, 9, S. 607-611, noch immer von unbefriedigenden Elektrodenstandzeiten beim Buckelschweißen von Aluminiumblechen die Rede.

Bei allen bisherigen Versuchen war eine Erhöhung der Elektrodenstandzeiten mit einer schon nach relativ geringen Standzeiten einsetzenden sukzessiven Verminderung der Scherzugbeanspruchbarkeit der Schweißverbindung und einer zunehmenden Verschlechterung der Oberflächenbeschaffenheit der Schweißstelle, die mit entsprechenden Abnutzungserscheinungen der Elektrodenkontaktflächen wie Löcherbildung und Anlegierungen einherging, verbunden. So sind beispielsweise Untersuchungen des Danish Welding Institute (1979, Bericht 79,15, sowie Fachzeitschrift "Schweißen und Schneiden" 33, 1981, Heft 10, S. 554-555) über das Punktschweißen von unbehandelten Aluminiumblechen mit Hilfe von mit Aluminiumlegierungen versehenen Elektroden bekannt geworden, bei denen zwar Elektrodenstandzeiten von 6000 Schweißungen ohne Zwischenbehandlung der Elektroden erreicht worden sind, die Güte der so hergestellten Schweißverbindungen jedoch sowohl hinsichtlich der Oberflächenbeschaffenheit der Schweißstellen als insbesondere auch hinsichtlich ihrer Scherzugfertigkeit zu wünschen übrig läßt.

Die dem Gesamtwiderstand der Schweißstelle zwischen den Elektroden proportionale Stromwärme verteilt sich auf die einzelnen in Stromflußrichtung hintereinandergeschalteten Bereiche der Schweißstelle (außenliegende Oxidschicht I-Metallschicht I - innenliegende Oxidschicht I - innenliegende Oxidschicht II - Metallschicht II - außenliegende Oxidschicht II) im Verhältnis der Teilwiderstände dieser Bereiche. Beim Punktschweißen von Stahlblechen entfallen wegen des relativ großen spezifischen Widerstandes von Stahl und dem vergleichsweise geringen Widerstand der diesen überziehenden Eisenoxidschicht 70-90 % des Gesamtwiderstandes der Schweißstelle und damit auch der Stromwärme auf das Metall und die innenliegenden Oxidschichten, während demgegenüber beim Punktschweißen unbehandelter Aluminiumbleche wegen des relativ geringen spezifischen Widerstandes von Aluminiumwerkstoffen und dem vergleichsweise hohen Widerstand der diese überziehenden Oxidschicht nur 40-50 % des Gesamtwiderstandes der Schweißstelle und damit der Stromwärme auf das Metall und die innenliegenden Oxidschichten entfallen und daher zumindest in der Anfangsphase des Schweißvorgangs der überwiegende Teil der Stromwärme in den beiden außenliegenden Oxidschichten entsteht.

Die in den außenliegenden Oxidschichten entstehende Wärme wird zunächst von den unmittelbar an diesen Oxidschichten anliegenden, bei Beginn des Schweißvorgangs noch verhältnismäßig kalten Elektroden aufgenommen. Bei der Punktschweißung von Stahlblechen werden wegen des auf die außenliegenden Oxidschichten entfallenden relativ geringen Stromwärmeanteils das Metall und die innenliegenden Oxidschichten an der Schweißstelle verhältnismäßig rasch auf die Schweißtemperatur erhitzt. Während dieser kurzen Zeit werden die ohnehin relativ geringen Stromwärmeanteile der außenliegenden Oxidschichten vollständig von den Elektroden aufgenommen, ohne daß sich die Elektroden dabei übermäßig erhitzen. Dagegen reicht bei der Punktschweißung von unbehandelten Aluminiumblechen die Wärmekapazität der Elektroden in der Regel nicht aus, um die dort auf die außenliegenden Oxidschichten entfallenden relativ großen Stromwärmeanteile ohne Erhitzung der Elektrodenkontaktflächen auf über der Anlegierungstemperatur liegende Temperaturen aufzunehmen.

Für die Erhitzung des Aluminiums und der innenliegenden Oxidschichten auf die Schweißtemperatur ist wegen des relativ geringen Stromwärmeanteils dieser Bereiche entweder ein entsprechend höherer Schweißstrom oder eine entsprechend größere Schweißdauer erforderlich. Somit kommen zu den relativ großen Stromwärmeanteilen der außenliegenden Oxidschichten noch relativ hohe Werte des Schweißstromes bzw. der Schweißdauer hinzu und außerdem ist die Anlegierungstemperatur bei Aluminiumwerkstoffen wesentlich niedriger als bei Stahl. So ergeben sich bei der Punktschweißung von unbehandelten Aluminiumblechen in aller Regel schon nach einigen wenigen Schweißungen und manchmal sogar schon bei der ersten Schweißung Anlegierungen von Aluminium an den Elektrodenkontaktflächen. Das Auftreten solcher Anlegierungen schon nach der ersten Schweißung deutet dabei auf zu niedrige Wärmekapazitäten der Elektroden und das Auftreten erst nach mehreren Schweißungen auf zu niedrige Kühlung der Elektroden bzw. zu rasche Aufeinanderfolge der einzelnen Schweißungen und ein dadurch verursachtes sukzessives Ansteigen der Anfangstemperatur der Elektroden bei Beginn der einzelnen aufeinanderfolgenden Schweißungen hin.

Den zu niedrigen Widerstandsanteil von Metall und innenliegenden Oxidschichten am Gesamtwiderstand der Schweißstelle zwischen den Elektroden hat man beispielsweise durch den Einsatz von Elektroden mit balligen Kontaktflächen um einiges steigern können. Solche Elektroden bewirken beim Vorpressen eine starke Zusammenpreßung der Bleche im Zentrum der vorgesehenen Schweißstelle, was zu einer Aufwölbung der Bleche in dem umgebenden Bereich und damit zu einer Spaltbildung zwischen den Blechen in diesem Umgebungsbereich führt. Dadurch wird die wirksame Kontaktfläche zwischen den beiden aufeinanderliegenden Blechen auf einen Wert beschränkt, der nur wenig größer als die wirksame Kontaktfläche Elektrode-Blech ist. Demgegenüber ergibt sich bei Elektroden mit ebener Kontaktfläche in der Regel eine wirksame Kontaktfläche zwischen den beiden aufeinanderliegenden Blechen von mehr als dem Doppelten der gesamten Kontaktfläche bzw. der Querschnittsfläche der Elektroden.

Die mit Elektroden mit balligen anstelle von ebenen Kontaktflächen erzielte Verminderung der wirksamen Kontaktfläche zwischen den beiden aufeinanderliegenden Blechen brachte zwar eine entsprechende Verringerung des Stromflußquerschnittes in den beiden Blechen und damit eine Vergrößerung des Widerstandsanteils von Metall und innenliegenden Oxidschichten am Gesamtwiderstand der Schweißstelle mit sich, allerdings in der Regel nur um weniger als 10 %. Immerhin reichte dies aber aus, um die Elektrodenstandzeit beim Punktschweißen von Aluminiumblechen bis zum ersten Auftreten von Anlegierungen an den Elektrodenkontaktflächen so weit zu steigern, daß eine praktische Anwendung des Punktschweißens von Aluminiumblechen in bestimmten Bereichen möglich wurde, so z. B. im Flugzeugbau, wo ein erhöhter Aufwand für das Schweißen in Form des Polierens der Elektroden nach Anbringung von jeweils z. B. 10 Schweißpunkten gegenüber den bei Verwendung von Aluminium erzielbaren Vorteilen, wie beispielsweise der Gewichtsersparnis, nur von untergeordneter Bedeutung ist.

Auch beim Buckelschweißen ergibt sich dadurch, daß die auf die Buckelspitze beschränkte Auflagefläche des mit dem Buckel versehenen Bleches auf dem anderen Blech relativ klein und dementsprechend der Stromflußquerschnitt in diesem Auflagebereich relativ gering ist, eine beträchtliche Erhöhung des Widerstandsanteils von Metall und innenliegenden Oxidschichten am Gesamtwiderstand der Schweißstelle zwischen den Elektroden. Allerdings wird der Buckel schon beim Vorpressen mehr oder weniger eingedrückt. Dadurch vergrößert sich einerseits die von der eingedrückten Buckelspitze gebildete Auflagefläche des einen Bleches auf dem anderen und andererseits verkleinern sich die Auflageflächen der Elektroden auf den Blechen, weil sich gleichzeitig mit der Eindrückung der Buckelspitze auch beide Bleche im Umgebungsbereich des Buckels von den Elektroden abheben.

Gemäß der DE-A-3 100 677 lassen sich Verbesserungen der Elektrodenstandzeiten beim Buckelschweißen von Aluminiumblechen durch spezielle Buckelformen erreichen, mit denen Verformungen des Buckels bei der Vorpreßung weitgehend vermieden werden. Daher wir auch das Abheben der Bleche von den Elektroden um Umgebungsbereich des Buckels, das zu dem relativ hohen Kontaktwiderstand zwischen der buckelseitigen Elektrode und dem mit dem Buckel versehenen Blech führt, weitgehend ausgeschaltet. Mit solchen speziellen Buckelformen lassen sich unter günstigen Voraussetzungen Elektrodenstandzeiten von über 100 Schweißungen erreichen, bevor eine Nachbearbeitung der Elektroden erforderlich wird. Für den Einsatz in Großserienfertigungen sind aber auch solche Elektrodenstandzeiten noch zu gering.

Schließlich ist in der DE-A-2 641 016 das Problem angesprochen, daß Werkstücke aus aluminiumhaltigem Material rasch einer Oxidation unterliegen und infolgedessen die Zahl der einwandfreien Schweißverbindungen, die zwischen Nachbearbeitungen der Elektroden oder dem Auswechseln derselben erzielbar sind, wesentlich abnimmt. Dem soll dadurch abgeholfen werden, daß eine Kontaktfläche einer Elektrode durch Kugelstrahlen und nachfolgendes Aufbringen eines Überzugs behandelt wird. Das Kugelstrahlen soll eine Kaltverfestigung der Kontaktfläche bewirken und sie dadurch beständiger gegen Verformung machen. Ferner wird vermutet, daß durch das Kugelstrahlen die betroffene Elektrode mit zahlreichen Eindrücken versehen wird, so daß eine Vielzahl von relativ scharfen Rändern zwischen benachbarten Eindrücken erhalten wird. Es wird angenommen, daß diese Ränder eine Verunreinigungsschicht auf dem Werkstück perforieren. Die Elektrodenkontaktfläche soll nach dem Kugelstrahlen galvanisch beschichtet, insbesondere vernickelt werden.

Die übliche Oxidschicht auf einem Werkstück oder Werkstückteil aus Aluminium oder Aluminiumlegierung gehört jedoch nicht zu den Verunreinigungen, die durch Ränder an durch Kugelstrahlen entstehenden Kratern auf der Elektrodenkontaktfläche in einer den Stromübergangswiderstand zwischen Elektrode und Werkstück nennenswert herabsetzenden Weise perforiert werden können. Eine solche Oxidschicht ist nämlich zu zäh, als daß sie sich durch an Kraterrändern allenfalls entstehende erhöhte Flächenpreßung perforieren ließe. Selbst wenn aber eine Perforation stattfinden sollte, könnten dadurch allenfalls einzelne Kontaktpunkte entstehen, in denen eine Elektrodenfläche den Werkstoff eines Werkstücks aus Aluminium unterhalb seiner Oxidschicht berührt. Für eine nennenswerte Verbesserung des Stromübergangs ist indessen eine flächenhafte, von jeglicher Oxidschicht freie Berührung erforderlich, die sich selbst durch eine vielfältige Perforation nicht ersetzen läßt.

Der Erfindung liegt daher die Aufgabe zugrunde, ein Verfahren der eingangs genannten Art und eine Einrichtung zur Durchführung des Verfahrens zu schaffen, mit denen aus Aluminium und/oder dessen Legierungen bestehende Werkstückteile und insbesondere Aluminiumbleche ähnlich problemlos und kostengünstig wie beim Widerstandspreßschweißen von Stahl miteinander verschweißt werden können, und mit denen sich bei hoher Güte der Schweißverbindungen wesentlich höhere Elektrodenstandzeiten als mit den bekannten Verfahren der eingangs genannten Art erreichen lassen.

Erfindungsgemäß wird das bei einem Verfahren der eingangs genannten Art dadurch erreicht, daß Elektroden verwendet werden, von denen mindestens eine an ihrer Kontaktfläche durch Kanten begrenzte Nuten von dreieckigem oder trapezförmigem Querschnitt und einem Kantenwinkel von 120° bis 150° zwischen den Nutwandflächen und der Ebene der Kontaktfläche aufweist, und daß die an dieser Kontaktfläche anliegende Werkstückseite während des Vorpreßens und vor dem Einschalten des Schweißstromes derart plastisch verformt wird, daß die an den Kanten reißende oberflächliche Aluminiumoxidschicht abgeschält wird und freigelegtes, im wesentlichen unoxidiertes Werkstückmaterial auf einer so großen Kontaktfläche in unmittelbaren, unter Preßdruck stehenden Kontakt mit den Nutwandflächen der Elektrode gebracht wird, daß dadurch unmittelbar beim Einschalten des Schweißstromes der Kontaktwiderstand zwischen der Elektrode und dem Werkstückteil kleiner ist als der vom Metall der zu verschweißenden Werkstückteile gebildete Widerstandsanteil am Gesamtwiderstand der Schweißstelle.

Hauptvorteil des vorliegenden Verfahrens ist, daß damit bei Verwendung unbehandelter Aluminiumbleche gleiche Widerstandsverhältnisse hinsichtlich der Aufteilung des Gesamtwiderstandes der Schweißstelle zwischen den Elektroden auf die beiden Kontaktwiderstände Elektrode-Blech und den von Metall und innenliegenden Oxidschichten gebildeten Widerstandsanteil an dem Gesamtwiderstand der Schweißstelle wie beim Widerstandspreßschweißen und insbesondere dem Punkt- und Buckelschweißen von Stahlblechen erreicht werden können. Es ist sogar möglich, den Anteil der Kontaktwiderstände Elektrode-Blech am Gesamtwiderstand der Schweißstelle trotz der Verwendung unbehandelter Aluminiumbleche auf Werte herabzusetzen, die noch unter den entsprechenden Werten beim Punkt- und Buckelschweißen von Stahlblechen liegen.

Dadurch lassen sich auch beim Widerstandspreßschweißen von Aluminiumblechen alle diejenigen Vorteile erreichen, die das Widerstandspreßschweißen von Stahlblechen bisher auszeichnete, wie z. B. Verwendbarkeit unbehandelter Bleche, Unabhängigkeit der Schweißverbindungen von der Anzahl der vorher mit den gleichen Elektroden nacheinander hergestellten Schweißverbindungen, geringe Abhängigkeit der Scherzugfertigkeit der Schweißverbindungen von Sollabweichungen der Betriebsparameter wie z. B. Stromstärke und Vorpreßkraft beim Schweißen, geringe Elektrodenabnützung und -verschmutzung sowie geringe Anlegierungsneigung von Werkstückmaterial an den Elektroden und somit hohe Elektrodenstandzeiten.

Bei den mit dem erfindungsgemäßen Verfahren erreichbaren, sehr geringen Anteilen der Kontaktwiderstände Elektrode-Blech am Gesamtwiderstand der Schweißstelle und den entsprechend geringen, auf die Kontaktstellen Elektrode-Blech entfallenden Stromwärmeanteilen an der gesamten an der Schweißstelle entstehenden Stromwärme wird bei Einschaltung des Schweißstromes zunächst die den relativ großen Übergangswiderstand zwischen den beiden Blechen bildende Kontaktstelle Blech-Blech, also ein genau an der vorgesehenen Verschweißungsstelle liegender zentraler Bereich, bis auf die Schweißtemperatur erhitzt. Gleichzeitig bleiben die Kontaktstellen Elektrode-Blech noch relativ kühl, weil die dort entstehende relativ geringe Stromwärme zunächst vollständig von den unmittelbar anliegenden, noch kalten Elektroden abgeführt wird.

Zwar dringt im weiteren Verlauf die an der Kontaktstelle Blech-Blech sowie in deren unmittelbarer Umgebung entstehende große Stromwärme wegen der höheren Wärmeleitfähigkeit von Aluminium schneller als beim Verschweißen von Stahlblechen zu den Kontaktstellen Elektrode-Blech vor, aber dafür entsteht anfangs der Hauptteil der Stromwärme wegen des wesentlich geringeren spezifischen Widerstandes von Aluminiumwerkstoffen an der den Übergangswiderstand bildenden Kontaktstelle Blech-Blech, und damit also in einem größeren mittleren Abstand von den beiden Kontaktstellen Elektrode-Blech als beim Verschweißen von Stahlblechen. Das schnellere Vordringen der Stromwärme im Aluminium wird deshalb zu einem großen Teil durch den größeren mittleren Abstand zwischen Hauptwärmequelle und Kontaktstelle Elektrode-Blech kompensiert. Daher verläuft der Temperaturanstieg an den Kontaktstellen Elektrode-Blech nach dem Einschalten des Schweißstromes sehr ähnlich wie beim Verschweißen von Stahlblechen.

Aufgrund dieses gegenüber dem bekannten Widerstandspreßschweißen von Aluminiumblechen vergleichsweise langsamen Temperaturanstiegs an den Kontaktstellen Elektrode-Blech werden während der Einschaltdauer des Schweißstromes an diesen Kontaktstellen weder Temperaturen der Aluminiumblechoberfläche erreicht, bei denen ein Anlegieren des Aluminiumwerkstoffes an der anliegenden Elektrodenkontaktfläche möglich wäre, noch Temperaturen der Elektrodenkontaktflächen, bei denen sich eine ausgeprägte Oxidation des Elektrodenkupfers und damit eine den Kontaktwiderstand Elektrode-Blech wesentlich verändernde Elektrodenverschmutzung ergeben würde. Infolgedessen ergeben sich sehr hohe Elektrodenstandzeiten, die bei gleicher oder wenigstens annähernd vergleichbarer Güte der hergestellten Schweißverbindungen bisher noch mit keinem der bekannten Widerstandspreßschweißverfahren von Aluminiumblechen erzielt werden konnten. Da die Schweißverhältnisse über sehr hohe Elektrodenstandzeiten annähernd konstant bleiben, ergibt sich auch über die gesamte Elektrodenstandzeit eine nahezu gleichbleibende Scherzugfestigkeit der Schweißverbindungen.

Es ist ein weiterer Vorteil des erfindungsgemäßen Verfahrens, daß wegen des relativ geringen Widerstandsanteils der Kontaktwiderstände Elektrode-Blech am Gesamtwiderstand der Schweißstelle nahezu die gesamte, der Schweißstelle zugeführte Energie dem eigentlichen Schweißprozeß zugute kommt und daher die Einschaltdauer des Schweißstromes oder dessen Höhe im Vergleich zu den bekannten Widerstandspreßschweißverfahren von Aluminiumblechen wesentlich herabgesetzt werden kann. Das wiederum hat in Verbindung mit dem relativ geringen Widerstandsanteil der Kontaktwiderstände Elektrode-Blech am Gesamtwiderstand der Schweißstelle den Vorteil, daß die von den Elektroden abzuführende Wärme wesentlich geringer ist als bei den bekannten Widerstandspreßschweißverfahren von Aluminiumblechen und daher Elektroden mit entsprechend geringerer Wärmekapazität und demzufolge entsprechend geringerem Gewicht verwendet werden können. Dies ist wiederum günstig für das Nachsetzverhalten der Elektroden.

Insgesamt konnten somit praktisch alle Probleme, die einer Anwendung des Widerstandspreßschweißens von Aluminiumwerkstücken in der Massenfertigung bisher im Wege standen, mit dem vorliegenden Verfahren überwunden werden und ein Widerstandspreßschweißverfahren für Aluminiumwerkstücke geschaffen werden, das hinsichtlich Problemlosigkeit und kostengünstiger Anwendbarkeit dem Widerstandspreßschweißen von Stahl in nichts nachsteht.

Vorzugsweise werden bei dem vorliegenden Verfahren beide den Elektroden zugewandten Werkstückseiten in der oben angegebenen Weise plastisch verformt, um auf beiden Seiten der Schweißstelle möglichst geringe Kontaktwiderstände Elektrode-Blech zu erzielen. Wenn allerdings auf einer Seite ohnehin ein relativ geringer Kontaktwiderstand vorhanden ist, wie dies z. B. beim Buckelschweißen auf der Außenseite des nicht mit dem Buckel versehenen Blechs der Fall sein kann, dann kann es auch von Vorteil sein, die besagte plastische Verformung nur auf der anderen Seite vorzunehmen, wobei diese andere Seite dann zweckmäßig der bewegten Elektrode zugewandt sein sollte.

Die den Elektroden zugewandten Werkstückseiten sollten beim Vorpressen zweckmäßig so weit plastisch verformt werden, daß der Kontaktwiderstand Elektrode-Werkstück beim Einschalten des Schweißstromes weniger als 30 %, vorzugsweise weniger als 20 %, des sich unmittelbar nach Zusammenbruch des Übergangswiderstandes zwischen den zu verschweißenden Werkstückteilen ergebenden Gesamtwiderstandes der Schweißstelle beträgt. Um die oben zusammengefaßten Vorteile des vorliegenden Verfahrens jedoch uneingeschränkt zur Geltung kommen lassen zu können, empfiehlt es sich, die den Elektroden zugewandten Werkstückseiten so weitgehend in der besagten Weise plastisch zu verformen, daß der Kontaktwiderstand Elektrode-Werkstück beim Einschalten des Schweißstromes weniger als 10 % des Gesamtwiderstandes beträgt.

Um anfangs eine möglichst weitgehende Konzentration der zugeführten Schweißenergie auf die Kontaktstelle zwischen den beiden Werkstückteilen und deren unmittelbarer Umgebung zu erreichen und damit sowohl die insgesamt zuzuführende Schweißenerige als auch die maximale Erwärmung der Kontaktstellen Elektrode-Blech so weit als möglich zu reduzieren, empfiehlt es sich, die den Elektroden zugewandten Werkstückseiten beim Vorpreßen so weit plastisch zu verformen, daß der Übergangswiderstand zwischen den zu verschweißenden Werkstückteilen vor dem Einschalten des Schweißstromes über 90 %, vorzugsweise zwischen 92 und 98 %, des Gesamtwiderstandes der Schweißstelle vor dem Einschalten des Schweißstromes beträgt.

Zweckmäßig werden zur Verhütung von Formänderungen der Elektrodenkontaktflächen Elektroden mit erhabenen Bereichen aus einer Kupferlegierung mit Legierungsanteilen aus der die Stoffe Chrom, Zirkon, Cadmium, Beryllium, Nickel, Silizium, Mangan und Eisen umfassenden Gruppe und mit mindestens dreimal so hoher 0,2-Dehngrenze wie der von reinem Weichkupfer sowie mit mindestens 75 % der elektrischen Leitfähigkeit desselben verwendet.

Die Erfindung betrifft weiter eine elektrische Widerstandspreßschweißeinrichtung zum Verschweißen von aus Aluminium und/oder dessen Legierungen bestehenden Werkstückteilen mit Elektroden zur Zuführung von Schweißstrom zu den zu verschweißenden Werstückteilen, Mitteln zum Einschalten des Schweißstromes und Mitteln zum Vorpreßen der zu verschweißenden Werkstückteile vor dem Einschalten des Schweißstromes sowie zur stetigen Aufrechterhaltung eines auf die Werkstückteile wirkenden Preßdruckes während des Stromflusses durch elastische Elektrodennachführung. Eine solche Einrichtung ist erfindungsgemäß dadurch gekennzeichnet, daß mindestens eine der Elektroden an ihrer Kontaktfläche durch Kanten begrenzte Nuten von dreieckigem oder trapezförmigem Querschnitt und einem Kantenwinkel von 120° bis 150° zwischen den Nutwandflächen und der Ebene der Kontaktflächen zur plastischen Verformung der ihr zugewandten Werkstückseite während des Vorpreßens aufweist, und daß die Mittel zum Einschalten des Schweißstromes derart gesteuert sind, daß dieser eingeschaltet wird, wenn der Kontaktwiderstand zwischen der Elektrode und dem Werkstückteil kleiner als der vom Metall der zu verschweißenden Werkstückteile gebildete Widerstandsanteil am Gesamtwiderstand der Schweißstelle ist.

Diese an mindestens einer der Elektrodenkontaktfläche ausgebildeten Nuten können zweckmäßig spiralförmig oder konzentrisch kreisförmig sein.

Die Mittel zum Einschalten des Schweißstromes sollten insbesondere bei einer zum Rollennahtschweißen von Aluminiumblechen ausgebildeten Einrichtung zweckmäßig eine mit Phasenanschnittssteuerung arbeitende und damit stromlose Zwischenzeiten für die Vorwärtsbewegung und das sich damit ergebende Vorpreßen der Werkstückteile freihaltende Thyristorsteuerung umfassen.

Die Erfindung wird im folgenden anhand schematischer Zeichnungen an einigen Ausführungsbeispielen näher erläutert. Es zeigt:

Fig. 1   den Zustand einer mit einem Ringbuckel versehenen Schweißstelle beim Buckelschweißen nach dem erfindungsgemäßen Verfahren nach dem Vorpreßen und vor Einschaltung des Schweißstromes, teilweise im Schnitt

Fig. 2   den Zustand einer Schweißstelle beim Punktschweißen nach dem erfindungsgemäßen Verfahren nach dem Vorpreßen und vor Einschaltung des Schweißstromes, teilweise im Schnitt

Fig. 3   einen Ausschnitt aus Fig.1 bzw. Fig.2, der das durch das Vorpreßen bewirkte Eindringen der profilierten Elektrodenkontaktfläche in das Werkstückmaterial im zentralen Bereich der Schweißstelle in vergrössertem Maßstab zeigt

Fig. 4   den Zustand der Elektrodenkontaktfläche der buckelseitigen Elektrode nach Ablauf der halben Elektrodenstandzeit beim Buckelschweißen von unbehandelten Aluminiumblechen nach dem vorliegenden Verfahren mit Elektroden mit profilierter Elektrodenkontaktfläche

Fig. 5   zum Vergleich den Zustand der Elektrodenkontaktfläche der buckelseitigen Elektrode nach nur sechs Schweißungen beim Buckelschweißen von unbehandelten Aluminiumblechen mit Elektroden mit ebener Elektrodenkontaktfläche

Fig. 6   den Zustand der Elektrodenkontaktfläche der flachblechseitigen Elektrode nach Ablauf der halben Elektrodenstandzeit beim Buckelschweißen von unbehandelten Aluminiumblechen nach dem vorliegenden Verfahren mit Elektroden mit profilierter Elektrodenkontaktfläche

Fig. 7   zum Vergleich den Zustand der Elektrodenkontaktfläche der flachblechseitigen Elektrode nach nur sechs Schweißungen beim Buckelschweißen von unbehandelten Aluminiumblechen mit Elektroden mit ebener Elektrodenkontaktfläche

Fig. 8   ein Diagramm der Scherbruchbeanspruchbarkeit von nach dem vorliegenden Verfahren hergestellten Schweißungen von unbehandelten Aluminiumblechen mit der gemessenen Scherbruchkraft über der bis zur Schweißung des jeweiligen Messobjektes ohne Zwischenbehandlung der Elektroden vorgenommenen Anzahl von Schweißungen

Fig. 9   den Zustand der der buckelseitigen Elektrode zugewandten Kontaktfläche des mit dem Ringbuckel versehenen Aluminiumbleches beim Buckelschweißen nach dem vorliegenden Verfahren nach dem Vorpressen und vor Einschaltung des Schweißstromes

Fig. 10　den Zustand der der buckelseitigen Elektrode zugewandten Kontaktfläche des vor der Schweißung mit dem Ringbuckel versehenen Aluminiumbleches nach Beendigung der Buckelschweißung nach dem vorliegenden Verfahren

Fig. 11　den Zustand der der flachblechseitigen Elektrode zugewandten Kontaktfläche des flachen Aluminiumbleches beim Buckelschweißen nach dem vorliegenden Verfahren nach dem Vorpreßen und vor Einschaltung des Schweißstromes

Fig. 12　den Zustand der der flachblechseitigen Elektrode zugewandten Kontaktfläche des flachen Aluminiumbleches nach Beendigung der Buckelschweißung nach dem vorliegenden Verfahren

Fig. 13　einen Querschliff durch eine nach dem vorliegenden Verfahren mit Elektroden mit profilierter Elektrodenkontaktfläche hergestellte Schweißung

Fig. 14　ein Schaltschema einer Schweißmaschine zur Durchführung des vorliegenden Verfahrens

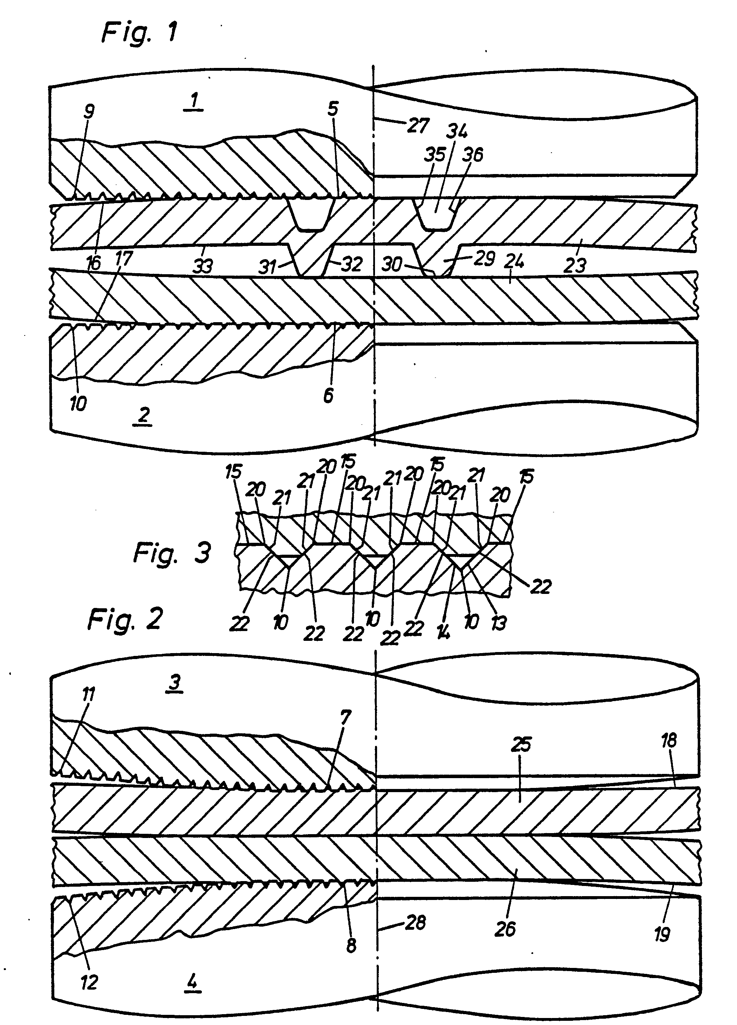

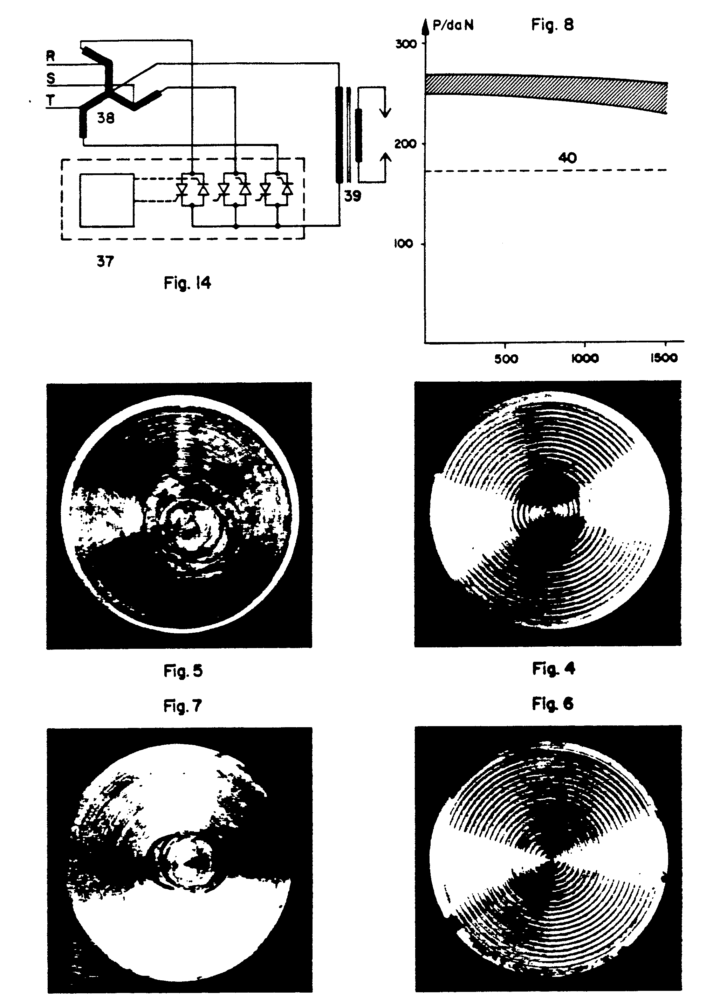

Zur Durchführung des vorliegenden Verfahrens werden bei den in den Figuren 1 und 2 gezeigten Ausführungsbeispielen Elektroden 1 und 2 bzw. 3 und 4 mit profilierter Kontaktfläche 5 und 6 bzw. 7 und 8 benützt, bei denen die Profilierung aus je einer spiralförmigen Nut 9 und 10 bzw. 11 und 12 mit dreieckigem Nutquerschnitt besteht, wie er in einem Ausschnitt in Fig. 3 im vergrösserten Maßstab dargestellt ist. Die Tiefe der Nuten 9, 10, 11 und 12 beträgt 0,12 mm und der seitliche Abstand der Mitten benachbarter Nutabschnitte der spiralförmigen Nuten 9, 10, 11 und 12 etwa 0,43 mm. Die beiden Wände der Nuten 9, 10, 11 und 12 schließen, wie am Beispiel der Nutenwände 13 und 14 der Nut 10 in Fig. 3 ersichtlich, einen Winkel von ca. 90° ein.

Die Spiralform der die Profilierung der Elektrodenkontaktflächen 5, 6, 7 und 8 bildenden Nuten 9, 10, 11 und 12 wurde deswegen gewählt, weil sich mit dieser Form die nach Ablauf einer Elektrodenstandzeit erforderliche Nachbearbeitung der Elektroden sehr einfach gestaltet, denn bei dieser Form ist nur ein Arbeitsgang für das Nachschneiden der spiralförmigen Nut und ein weiterer Arbeitsgang für das Abdrehen der erhabenen Bereiche der Elektrodenkontaktfläche um die der Vertiefung der Nut beim Nachschneiden entsprechende Schichtdicke erforderlich, wobei beide Arbeitsgänge mit ein und derselben Einspannung der Elektrode auf der Drehbank durchgeführt werden können. Neben der Spiralform gibt es aber auch noch eine Reihe anderer vorteilhafter Profilformen, beispielsweise zur Elektrodenachse konzentrische kreisförmige Nuten, die z. B. mit einem Vielfachwerkzeug in einem Arbeitsgang gleichzeitig nachgeschnitten werden können, wobei in demselben Arbeitsgang mit dem gleichen Vielfachwerkzeug auch die erhabenen Bereiche der Elektrodenkontaktfläche noch mit nachgedreht werden können. Eine andere vorteilhafte Profilform wäre die Profilierung mit zwei gleichgroßen Gruppen von jeweils zueinander parallelen Nuten, wobei die Nuten der beiden Gruppen sich, vorzugsweise im rechten Winkel, kreuzen und so eine Art waffelmusterförmiger Profilierung entsteht. Auch bei dieser Profilierung ließe sich mit Vielfachwerkzeugen wie z. B. profilierten Fräs- oder Schleifscheiben mit einer der Anzahl der Nuten pro Gruppe entsprechenden Anzahl von zur Nutennachbearbeitung vorgesehenen Frässcheiben- bzw. Schleifscheibenabschnitten und einer entsprechenden Anzahl von zwischen diesen einzelnen Scheibenabschnitten angeordneten Frässcheiben- bzw. Schleifscheibenabschnitten geringeren Durchmessers zum Abfräsen bzw. Abschleifen der erhabenen Kontaktflächenbereiche die Nachbearbeitung der Elektroden relativ einfach gestalten und auf nur zwei Arbeitsgänge beschränken.

Während also für den Verlauf der die Profilierung bildenden Nuten 9, 10, 11 und 12 in erster Linie Gesichtspunkte der Nachbearbeitung von Bedeutung sind, kommt der Querschnittsform der Nuten und der Breite der zwischen benachbarten Nutabschnitten liegenden erhabenen Bereiche 15 (bzw. der Breite und Tiefe der Nuten sowie dem Abstand der Mitten benachbarter Nutabschnitte) für die Verfahrensdurchführung selbst eine wesentliche Bedeutung zu. Denn der Zweck des für das vorliegende Verfahren entscheidenden Verfahrensschrittes der plastischen Verformung der den Elektroden 1, 2 bzw. 3, 4 zugewandten Werkstückseiten 16, 17 bzw. 18, 19 ist ja das Reißen der oberflächlichen Aluminiummoxidschicht an den Verformungsstellen 20 und der unmittelbare Kontakt von an den Rißstellen hervortretendem, im wesentlichen unoxidiertem Werkstückmaterial 21 mit der der betreffenden Werkstückseite 16, 17 bzw. 18, 19 zugewandten Elektrode 1, 2 bzw. 3, 4, und zu diesem Zweck ist es bei einer Profilierung der Elektrodenkontaktflächen 5, 6 bzw. 7, 8 in Form von Nuten 9, 10 bzw. 11, 12 erforderlich, daß sich erstens erhabene Bersiche 15 der Elektrodenkontaktfläche 5, 6 bzw. 7, 8 während des Vorpreßens in die Werkstücksoberfläche einpreßen, weswegen die Breite der erhabenen Bereiche 15 zur Vermeidung von übermässig hohen Vorpreßkräften nicht zu groß sein darf, und daß zweitens die in die Werkstückoberfläche eingepreßten erhabenen Bereiche der Elektrodenkontaktfläche oder genauer gesagt die an diese angrenzenden Nutenwandbereiche 22 in einem unter Preßdruck stehenden unmittelbaren elektrischen Kontakt mit dem durch das Einpressen hervorgetretenen, an diesen Nutenwandbereichen 22 anliegenden unoxidierten Werkstückmaterial 21 kommen, wozu ein stumpfer Kantenwinkel zwischen erhabenem Bereich 15 und angrenzendem Nutenwandbereich 22 erforderlich ist, weil es bei rechtwinkliger Kante oder gar einem spitzen Kantenwinkel keinen Preßdruck der Nutenwandbereiche 22 auf das unoxidierte Werkstückmaterial 21 gäbe. Zur Erzielung eines ausreichenden Preßdruckes sollte der Kantenwinkel zweckmässig im Bereich von 120° bis 150° und vorzugsweise, wie in Fig. 3 gezeigt, bei etwa 135° liegen. Das besagte Einpressen erhabener Bereiche der Elektrodenkontaktfläche in die Werkstückoberfläche ist in diesem Zusammenhang deswegen erforderlich, weil nur unter dieser Voraussetzung durch die bei diesem Einpreßen auftretende Scherwirkung an den Kanten der erhabenen Bereiche der angestrebte unmittelbare Kontakt zwischen Elektrodenkontaktfläche und unoxidiertem Werkstückmaterial zustandekommt, während bei reiner Druckbelastung der Werkstückoberfläche, wie sie bei den bisher üblichen Elektroden mit ebener oder balliger Elektrodenkontaktfläche gegeben ist, selbst in dem sehr unwahrscheinlichen Fall, daß sich beim Vorpreßen eine zur Bildung feiner Risse in der Aluminiumoxidschicht führende plastische Verformung der Werkstückoberfläche ergeben würde, kein unoxidiertes Werkstückmaterial in unmittelbaren Kontakt mit der Elektrodenkontaktfläche kommt, weil die zwischen Elektrodenkontaktfläche und Werkstückmaterial liegende Aluminiumoxidschicht auch bei feinen Rissen in derselben bei ebenen oder nahezu ebenen Elektrodenkontaktflächen einen ihrer Schichtdicke entsprechenden Abstand zwischen Elektrodenkontaktfläche und Werkstückmaterial aufrechterhält und daher einen unmittelbaren Kontakt zwischen Elektrodenkontaktfläche und unoxidiertem Werkstückmaterial verhindert.

Da das Zustandekommen eines unmittelbaren Kontaktes zwischen Elelctrodenkontaktfläche und unoxidiertem Werkstückmaterial wesentlich von der beim Einpreßen der erhabenen Bereiche 15 der Elektrodenkontaktfläche in die Werkstückoberfläche auftretenden Scherwirkung an den Kanten 20 der erhabenen Bereiche abhängt und diese Scherwirkung umso besser ist, je schärfer die Kanten 20 der erhabenen Bereiche 15 sind bzw. je geringer der Krümmungsradius der Elektrodenkontaktfläche an diesen Kanten ist, ist es ferner zur Erzielung hoher Elektrodenstandzeiten von ausschlaggebender Bedeutung, die unvermeidliche Abnützung dieser Kanten 20 im Betrieb so gering wie möglich zu halten. Daher werden zur Durchführung des vorliegenden Verfahrens Elektroden aus speziellen Kupferlegierungen mit einem Vielfachen der Festigkeit von reinem Weichkupfer und einer nur unwesentlich geringeren elektrischen Leitfähigkeit als der von reinem Weichkupfer benützt, bei den in den Figuren 1 und 2 gezeigten Ausführungsbeispielen z. B. Elektroden 1, 2 bzw. 3, 4 aus einer Kupfer-Chrom-Zirkon-Legierung mit etwa der achtfachen 0,2-Dehngrenze und 87 % der elektrischen Leitfähigkeit von reinem Weichkupfer. Man könnte aber auch an den Stellen der erhabenen Bereiche besonders harte Materialien in die Elektrode einsetzen, die dann die Kanten dieser erhabenen Bereiche bilden und so die Kantenabnützung ganz wesentlich herabsetzen würden, denn der eigentliche unmittelbare Kontakt zwischen Elektrodenkontaktfläche und unoxidiertem Werkstückmaterial erfolgt ja an den Nutenwänden, und diese könnten auch bei einer solchen Ausbildung aus Kupfer bestehen (z. B. wäre es bei einer waffelmusterförmigen Profilierung der Elektrodenkontaktfläche ohne weiteres möglich, die erhabenen Bereiche und deren Kanten durch in die Kupferelektrode eingesetzte Stahlstifte zu bilden). Eine solche Weiterbildung der Elektroden hätte den Vorteil einer noch weitergehenden Erhöhung der Elektrodenstandzeiten, denn bei dem vorliegenden Verfahren werden die Elektrodenstandzeiten in erster Linie durch die Scherwirkung an den Kanten 20 der erhabenen Bereiche 15 der Elektrodenkontaktfläche bestimmt, und Anlegierungen sowie Elektrodenverschmutzungen treten erst dann auf, wenn diese Scherwirkung infolge der Kantenabnützung wesentlich nachgelassen hat.

Wesentlich für die Vermeidung von Anlegierungen an den Elektrodenkontaktflächen ist ferner eine ausreichende Wärmekapazität der Elektroden und eine genügende Kühlung derselben. Die Wärmekapazität bzw. die Wärmeaufnahmefähigkeit der Elektroden ist dann ausreichend, wenn die Temperatur der Elektrodenkontaktflächen während der Einschaltdauer des Schweißstromes und gegebenenfalls auch während einer eventuellen Nachpreßzeit unter der Anlegierungstemperatur bleibt, und eine genügende Kühlung der Elektroden ist dann gegeben, wenn die den Elektroden während der Einschaltdauer des Schweißstromes sowie der eventuellen Nachpreßzeit zugeführte Wärme in dem zwischen aufeinanderfolgenden Schweißungen bzw. genauer gesagt zwischen den Stromeinschaltzeitpunkten aufeinanderfolgender Schweißungen liegenden Zeitraum von dem Kühlmittel vollständig wieder abgeführt wird. Bei den Ausführungsbeispielen wurden Elektroden 1 und 2 bzw. 3 und 4 mit einem Durchmesser von 19 mm und einer Wärmekapazität von ca. 4 cal/°C verwendet, die mit einem Kühlmitteldurchfluß von 6 Liter Wasser pro Minute gekühlt wurden, und damit konnte die Temperatur an den Elektrodenkontaktflächen während einer ganzen Serie von über 1000 Schweißungen unter 80 % der Anlegierungstemperatur gehalten werden.

Wichtig für die Vermeidung des Anlegierens und anderer Elektrodenverschmutzungen ist ferner auch die stetige Aufrechterhaltung eines ausreichend hohen Preßdruckes der Elektroden auf die zu verschweißenden Aluminiumbleche zumindest über die Stromflußdauer des Schweißstromes, weil die angestrebten, im Vergleich zum Gesamtwiderstand der Schweißstelle geringen Kontaktwiderstände Elektrode-Werkstück sich nur bei einem ausreichend hohen Preßdruck aufrechterhalten lassen, während diese Kontaktwiderstände und damit natürlich auch die auf dieselben entfallenden Stromwärmeanteile bei Abfall des Elektrodenpreßdruckes sofort ansteigen und daher ein solcher Druckabfall unmittelbar zu einem Anlegieren von Werkstückmaterial an den Elektrodenkontaktflächen führen kann. Bei den Ausführungsbeispielen in den Figuren 1 und 2 ist zur stetigen Aufrechterhaltung des Preßdruckes der Elektroden 1 und 2 bzw. 3 und 4 eine in den Zeichnungen nicht dargestellte Nachsetzeinrichtung mit Federmitteln und pneumatischen Mitteln zur Erzeugung und Aufrechterhaltung eines stetigen Preßdruckes der Elektroden 1 und 2 bzw. 3 und 4 sowie zum Aufsetzen und Abheben einer der beiden Elektroden (1 bzw. 3) vorgesehen. Die Nachsetzeinrichtung ist so eingestellt, daß auf die Elektroden 1 und 2 bzw. 3 und 4 eine Preßkraft von 400 daN ausgeübt wird. Diese Preßkraft reicht in Verbindung mit der so gering wie möglich gehaltenen Masse der bewegten Elektrode 1 bzw. 3 aus, um der bewegten Elektrode bei der Erweichung und Zusammendrückung des Buckels während des Schweißstromflusses beim Buckelschweißen bzw. bei einer Erweichung des Werkstückmaterials auf den den Elektroden zugewandten Werkstückseiten während des Schweißstromflusses beim Punktschweißen eine für ein verzögerungsfreies Nachsetzen ausreichend hohe Beschleunigung zu erteilen. Maßgebend für diese Beschleunigung ist die Differenzkraft zwischen der Preßkraft und der vor dem Erweichen die Preßkraft aufhebenden und mit dem Erweichen rasch abfallenden Gegenkraft, und der zeitliche Anstieg dieser Differenzkraft und damit auch der zeitliche Anstieg der das Nachsetzen der Elektrode bewirkenden Beschleunigung ist umso größer, je größer die Preßkraft ist. Wenn daher in besonderen Fällen win vollständig verzögerungsfreies Nachsetzen nicht erreicht wird, was an einer Spritzerbildung in der Umgebung der Schweißstelle erkennbar ist, so läßt sich dieses durch eine Erhöhung der von der Nachsetzeinrichtung ausgeübten Preßkraft erreichen. Das ist insbesondere für das Punktschweißen von Bedeutung, weil dort auch noch wesentlich höhere Preßkrafte angewandt werden können, während die Höhe der Preßkraft beim Buckelschweißen im allgemeinen durch die Stabilität des Buckels begrenzt wird.

Bei der Durchführung des vorliegenden Verfahrens werden zunächst die beiden miteinander zu verschweißenden unbehandelten Aluminiumbleche 23 und 24 bzw. 25 und 26 so zwischen den beiden Elektroden 1 und 2 bzw. 3 und 4 positioniert, daß die Elektrodenachse 27 bzw. 28 möglichst genau durch das Zentrum der vorgesehenen Schweißstelle und bei dem Ausführungsbeispiel in Fig. 1 damit gleichzeitig auch durch das Zentrum des dort in dem Aluminiumblech 23 vorgesehenen Ringbuckels 29 verläuft. Der Ringbuckel 29 hat bei dem Ausführungsbeispiel in Fig. 1 die in der CH-Anmeldung 5948/81 näher beschriebene Ausbildung und ermöglicht daher die Anwendung einer relativ hohen Preßkraft, im vorliegenden Beispiel die oben schon genannten 400 daN, und damit wiederum, wie ebenfalls oben bereits erwähnt, ein verzögerungsfreies Nachsetzen der bewegten Elektrode 1 bei seiner Erweichung und Zusammendrückung während des Schweißstromflusses. Der mittlere Durchmesser des Ringbuckels 29 ist 3,6 mm, seine Höhe vor der Vorpreßung 0,67 mm und nach Beaufschlagung der Elektrode 1 mit der Vorpreßkraft 0,55 mm, die Breite seines ringfömigen Auflagebereiches 30 vor der Vorpreßung 0,4 mm und nach Beaufschlagung der Elektrode 1 mit der Vorpreßkraft ca. 0,5 mm und der Winkel seiner Flanken 31 und 32 gegen die Ebene der Blechoberfläche 33 vor der Vorpressung ca. 112°. Die dem Ringbuckel 29 gegenüberliegende ringförmige Vertiefung 34 in dem Aluminiumblech 23 hat ebenfalls einen mittleren Durchmesser vov 3,6 mm und vor der Vorpreßung eine Tiefe von 0,67 mm, eine Breite in der Ebene der Blechoberfläche 16 von ca. 1 mm und einen Winkel zwischen ihren Flanken 35 und 36 und der Ebene der Blechoberfläche 16 von ca. 112°. Für die Aluminiumbleche 23 und 24 bzw. 25 und 26 wurden bei den Ausführungsbeispielen in den Figuren 1 und 2 unbehandelte Bleche von 1,5 mm Stärke aus einer Aluminium-Magnesium-Legierung mit einem Legierunganteil von 3 % Magnesium verwendet. Bei den Elektroden 1 und 2 beim Ausführungsbeispiel in Fig. 1 liegen die erhabenen Bereiche (15 in Fig. 3) der Elektrodenkontaktfläche 5 bzw. 6 in einer Ebene und bei den Elektroden 3 und 4 beim Ausführungsbeispiel in Fig. 2 in einer Kugelfläche mit einem Flächenkrümmungsradius von 100 mm.

Nach der Positionierung der zu verschweißenden Aluminiumbleche 23 und 24 bzw. 25 und 26 wird die bewegbare Elektrode 1 bzw. 3 auf die Schweißstelle abgesenkt und anschließend mit Hilfe der oben erwähnten, in den Zeichnungen nicht dargestellten pneumatischen Mittel und Federmittel mit der Vorpreßkraft beaufschlagt. Die Beaufschlagung erfolgt mit einem steitigen Anstieg der Preßkraft von Null bis auf den vorgesehenen Endwert, wobei die Steilheit dieses Anstieges durch die Zeitkonstante der pneumatischen Mittel bestimmt ist. Während des Anstiegs der Preßkraft ergeben sich im Berich der Schweißstelle und deren Umgebung folgende Verformungen: Zunächst einmal werden die beiden Bleche 23 und 24 bzw. 25 und 26 in der Umgebung der vorgesehenen Schweißstelle aufgewölbt, und zwar bei dem Ausführungsbeispiel in Fig. 1 in Richtung aufeinander zu und bei dem Ausführungsbeispiel in Fig. 2 in Richtung voneinander weg. Durch diese Aufwölbung heben sich die beiden Bleche 23 und 24 bzw. 25 und 26 bei dem Ausführungsbeispiel in Fig. 1 von den äußeren Bereichen der Elektrodenkontaktflächen 5 und 6 und bei dem Ausführungsbeispiel in Fig. 2 in der Umgebung der vorgesehenen Schweißstelle voneinander ab. Das hat zur Folge, daß sich bei dem Ausführungsbeispiel in Fig. 1 die Größe der Kontaktflächen zwischen Elektrode 1 und Blech 23 sowie zwischen Elektrode 2 und Blech 24 und bei dem Ausführungsbeispiel in Fig. 2 die Größe der Kontaktfläche zwischen den beiden Blechen 25 und 26 verringert und gleichzeitig auch dis Flächenpreßung im Bereich der verbliebenen Kontaktflächen ansteigt. Des weiteren pressen sich die erhabenen Bereiche (15 in Fig. 3) der Elektrodenkontaktflächen 5 und 6 bzw. 7 und 8 während des Anstiegs der Preßkraft in die ihnen zugewandten Seiten 16 und 17 bzw. 18 und 19 der Bleche 23 und 24 bzw. 25 und 26 ein, wobei sich in den an die Kanten (20 in Fig. 3) dieser erhabenen Bereiche angreuzenden Nutenwandbereichen (22 in Fig. 3) der angestrebte unmittelbare Kontakt zwischen Elektrode und unoxidirtem Werkstückmaterial (21 in Fig. 3) ergibt. Und schließlich wird bei dem Ausführungsbeispiel in Fig. 1 während des Anstiegs der Preßkraft noch der Ringbuckel 29 in seiner Höhe etwas gestaucht. Nach Erreichen des Endwertes der Vorpreßkraft von 400 daN haben die Auflagefläche der Elektrode 1 auf dem Blech 23 einen Durchmesser von ca. 8,8 mm, die Auflagefläche der Elektrode 2 auf dem Blech 24 einen Durchmesser von ca. 6,5 mm und die Auflageflächen der Elektroden 3 und 4 auf den Blechen 25 und 26 einen Durchmesser von ca. 5,2 mm. Die Auflageflächen der beiden Bleche 23 und 24 bzw. 25 und 26 aufeinander und damit die Kontaktflächen zwischen den beiden Blechen betragen nach Erreichen des Endwertes der Vorpreßkraft von 400 daN zwischen den Blechen 23 und 24 ca. 5,7 mm² (Auflagefläche des Ringbuckels 29 auf dem Blech 24) und zwischen den Blechen 25 und 26 ca. 32,4 mm², und die Kontaktflächen des unmittelbaren Kontaktes zwischen Elektrode und unoxidiertem Werkstückmaterial (Summe der Flächen der an unoxidiertem Werkstückmaterial 21 anliegenden Nutenwandbereiche 22) betragen nach Erreichen des Endwertes der Vorpreßkraft zwischen Elektrode 1 und Blech 23 ca. 7,5 mm², zwischen Elektrode 2 und Blech 24 ca. 6,4 mm² und zwischen Elektrode 3 und Blech 25 sowie zwischen Elektrode 4 und Blech 26 ca. 6,8 mm², wobei das Material der Bleche 23 und 24 in der Umgebung der Elektrodenachse sowie in der unmittelbaren Umgebung der ringförmigen Vertiefung 34 etwa bis zu 40 % der Nuttiefe in die Nuten 9 und 10 und das Material der Bleche 25 und 26 in der Umgebung der Elektrodenachse etwa bis zu 50 % der Nuttiefe in die Nuten 11 und 12 eindringt. Die Höhe des Ringbuckels 29 beträgt nach Erreichen des Endwertes der Vorpreßkraft von 400 daN noch 0,55 mm. Das Verhältnis der einzelnen Kontaktwiderstände zu dem jeweils zugeordneten, vom Metall der zu verschweißenden Werkstückteile gebildeten Widerstand beträgt nach Erreichen des Endwertes der Vorpreßkraft von 400 daN bei dem Ausführungsbeispiel in Fig. 1 für den Kontaktwiderstand zwischen Elektrode 1 und Blech 23 ca. 0,105 und für den Kontaktwiderstand zwischen Elektrode 2 und Blech 24 ca. 0,121 und bei dem Ausführungsbeispiel in Fig. 2 für den Kontaktwiderstand zwischen Elektrode 3 und Blech 25 sowie für den Kontaktwiderstand zwischen Eloktrode 4 und Blech 26 jeweils ca. 0,16. Die Bestimmung dieser Verhältnisse erfolgt dynamisch durch gleichzeitige oszillographische Messung und Aufzeichnung von Schweißstrom und Spannung über der Schweißstelle während der ersten 5 ms nach Einschalten des Schweißstromes mittels eines nachleuchtenden oder anderweitig speichernden Zweistrahloszillographen und Ermittlung des Gesamtwiderstandes der Schweißstelle aus den aufgezeichneten Meßkurven an dem Zeitpunkt, bei dem der von den innenliegenden Oxidschichten der beiden Bleche im stromlosen Zustand gebildete Übergangswiderstand zwischen den beiden Blechen zusammengebrochen ist, was in dem Oszillogramm der Spannung über der Schweißstelle durch den Endpunkt eines auf einen Bereich starker unregelmäßiger Spannungsschwankungen folgenden steilen Abfalles der Spannungskurve und den Übergang auf eine mehrere Millisekunden nahezu konstant bleibende Spannung charakterisiert ist. Dieser sich unmittelbar nach dem Zusammenbruch des Übergangswiderstandes zwischen den zu verschweißenden Werkstückteilen ergebende Gesamtwiderstand der Schweißstelle wird mit einem Nennwiderstand verglichen, der im Prinzip ebenso wie der vorgenannte Gesamtwiderstand ermittelt wird (also mit Blechen von gleicher Stärke und aus gleichem Material und gegebenenfalls mit gleicher Buckelform auf der gleichen Schweißmaschine mit gleich dimensionierten Elektroden) und dessen Ermittlung nur darin von der Ermittlung des vorgenannten Gesamtwiderstandes abweicht, daß die außenliegenden Seiten der beiden Bleche durch Feinschliff von ihrer Oxidschicht befreit sind und Elektroden mit glatter, unprofilierter Kontaktfläche verwendet werden. Die sich ergebende Differenz zwischen dem vorgenannten Gesamtwiderstand und diesem Nennwiderstand entspricht dann der Summe der Kontaktwiderstände beider Elektroden, und das Verhältnis der einzelnen Kontaktwiderstände zu dem vom Metall der zu verschweißenden Werkstückteile gebildeten Widerstand ist das Verhältnis dieser Differenz zum $(1 + F_1/F_2)$-fachen des genannten Nennwiderstandes, wenn

mit $F_1$ die Kontaktfläche des unmittelbaren Kontaktes zwischen Elektrode uud unoxidiertem Werkstückmaterial an der betrachteten Kontaktstelle und mit $F_2$ die entsprechende Kontaktfläche an der anderen Kontaktstelle bezeichnet wird. Da der Nennwiderstand bei fest vorgegebenen Schweißbedingungen (also bei vorgegebener Stärke und vorgegebenem Material und gegebenenfalls vorgegebener Buckelform der Bleche sowie bei vorgegebenen Dimensionen der Elektroden) eine konstante Größe ist und die genannten Oszillogramme von Schweißtrom und Spannung über der Schweißstelle während der ersten 5 ms ohne weiteres im normalen Schweißbetrieb aufgenommen werden können, ermöglicht die beschriebene dynamische Bestimmung des Verhältnisses von Kontaktwiderstand zu Metallwiderstand eine fortlaufende und gegebenenfalls auch automatisierbare Kontrolle während des normalen Schweißbetriebes. Neben der dynamischen Bestimmung der besagten Verhältnisse gibt es ferner auch noch die Möglichkeit der statischen Bestimmung mit Hilfe von zwei Musterschweißstellen, von denen eine erste von zwei Blechen, die nur an ihrer innenliegenden Seite von ihrer Oxidschicht befreit sind, und die zweite von zwei Blechen, die sowohl an ihrer innenliegenden wie auch an ihrer außenliegenden Seite von ihrer Oxidschicht befreit sind, gebildet wird. Bei der ersten Musterschweißstelle wird mit profilierter Elektrode und bei der zweiten mit glatter Elektrode jeweils nach Erreichen des Endwertes der Vorpreßkraft von 400 daN statisch der Widerstand gemessen, und die beiden Widerstände werden dann wie oben der Gesamtwiderstand und der Nennwiderstand miteinander vergleichen.

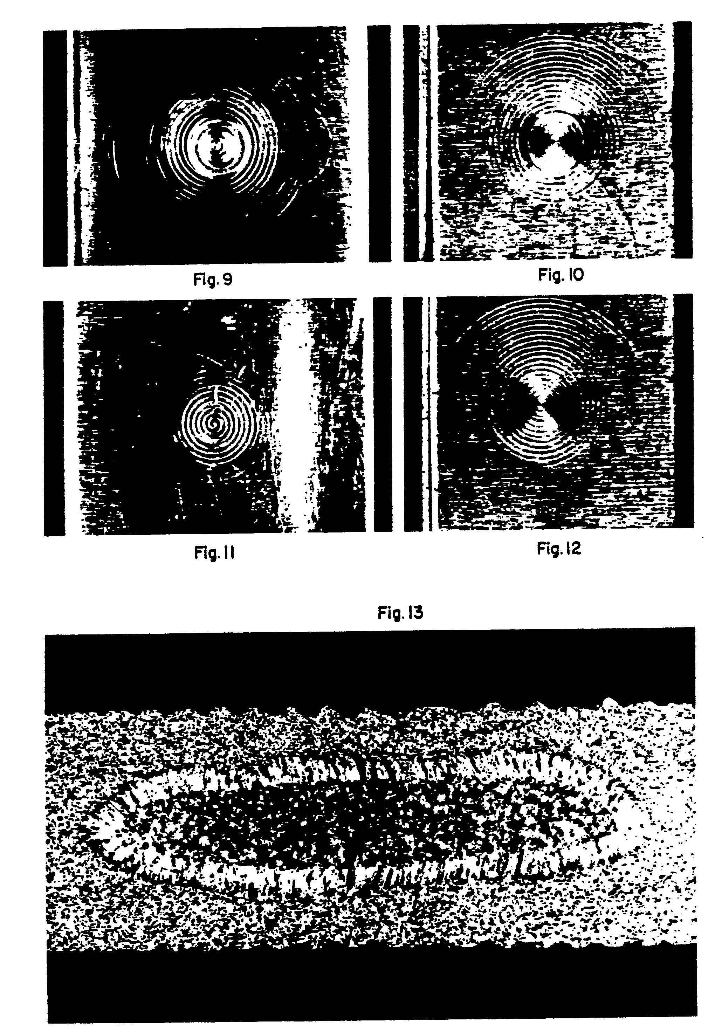

Den Zustand der den Elektroden zugewandten Seiten der Bleche nach Erreichen des Endwertes der Vorpreßkraft zeigen für das Ausführungsbeispiel in Fig. 1 die Figuren 9 und 11, und zwar die Fig. 9 den Zustand der Seite 16 des Bleches 23 und die Fig. 11 den Zustand der Seite 17 des Bleches 24. In den Figuren sind die Spuren des Einpreßens der erhabenen Bereiche (15 in Fig. 3) der Elektrodenkontaktflächen 9 und 10 der Elektroden 1 und 2 deutlich sichtbar. Bei dem Ausführungsbeispiel in Fig. 2 entspricht der Zustand der den Elektroden zugewandten Seiten der Bleche 25 und 26 nach Erreichen des Endwertes der Vorpreßkraft etwa der Fig. 11 ohne den in dieser Figur äußersten Spiralring. Die Figuren 1 und 2 zeigen im übrigen ebenfalls den Zustand der in diesen Figuren größtenteils im Schnitt dargestellten Schweißstellen nach Erreichen des Endwertes der Vorpreßkraft, so daß an diesen Figuren deutlich sichtbar wird, wodurch die Auflageflächen der Elektroden auf den Blechen sowie bei der Punktschweißung (Fig. 2) die Auflagefläche der beiden Bleche aufeinander beschränkt werden und sich damit an den betreffenden Stellen definierte Widerstände ergeben, nämlich durch die schon

erwähnte Aufwölbung der Bleche im Umgebungsbereich der Schweißstelle.

Die Dauer der Vorpreßzeit vom Beginn des Anstiegs der Preßkraft bis zum Einschaltzeitpunkt des Schweißstromes beträgt bei den Ausführungsbeispielen in den Figuren 1 und 2 ca. 0,4 s. Dieser Zeitraum von 0,4 s reicht auch im Falle größerer Toleranzen der Steilheit des Preßkraftanstiegs (z. B. infolge von Schwankungen der Zeitkonstante der pneumatischen Mittel) sowie im Falle von größeren Toleranzen der für das Einpreßen der erhabenen Bereiche der Elektrodenkontaktflächen in die zugeordneten Blechoberflächen erforderlichen Zeit (z. B. infolge von Schwankungen der Festigkeitseigenschaften der zu verschweißenden Bleche innerhalb einer Serie von Schweißungen) auf jeden Fall aus, um innerhalb dieses Zeitraumes den vorgesehenen Endwert der Vorpreßkraft von 400 daN und die für das Einpressen der erhabenen Bereiche der Elektrodenkontaktflächen in die zugeordneten Blechoberflächen vorgesehene Eindringtiefe zu erreichen. In diesem Fall enthält die zum Einschalten des Schweißstromes dienende Thyristorsteuerung 37 in der Fig. 14 im Prinzipschaltschema gezeigten, zur Durchfürung des vorliegenden Verfahrens vorgesehenen Widerstandpreßschweißeinrichtung nur ein mit der Steuerung der genannten pneumatischen Mittel gekoppeltes Zählglied, das von der Steuerung der pneumatischen Mittel bei Beginn des Preßkraftanstiegs ein Startsignal erhält und dann nach Abzählen von 10 Perioden oder 20 Halbperioden des Wechselstromes ein Steuersignal zum Einschalten des Schweißstromes abgibt, aber wenn eine solche relativ lange Zeitdauer wie z. B. die genannten 0,4 s für die Vorpreßzeit nicht zur Verfügung steht sondern die Vorpreßzeit so gering wie möglich gehalten werden soll, dann empfiehlt es sich, an der Widerstandspreßschweißeinrichtung eine Messeinrichtung vorzusehen, die entweder direkt oder indirekt (z. B. über die Höhe der erreichten Preßkraft) die Eindringtiefe der erhabenen Bereiche im Zentrum der Elektrodonkontaktflächen in die zugeordneten Blechoberflächen mißt und bei Erreichen der vorgesehenen Eindringtiefe an die Thyristorsteuerung 37 ein Steuersignal zum Einschalten des Schweißstromes abgibt. Auf diese Weise kann die im vorliegenden Fall gewählte, relativ lange Vorpreßzeit von 0,4 s mit Vorteil wesentlich herabgesetzt werden. Nach Ablauf der Vorpreßzeit wird mit Hilfe der Thyristorsteuerung 37 der Schweißstrom eingeschaltet. Die Thyristorsteuerung 37 bewirkt eine Gleichrichtung der von dem dreiphasigen Eingangstransformator 38 gelieferten Phasenspannungen, so daß mit dem Einschalten derselben an die Primärseite des Schweißtransformators 39 eine pulsierende Gleichspannung angelegt wird, die in der Primärseite des Schweißtransformators 39 einen ebenfalls pulsierenden, im Mittel proportional der Funktion 333A[(1-e$^{-t/14ms}$)+3(1-e$^{-t/1400ms}$)] ansteigenden Gleichstrom verursacht. Dieser durch die Primärseite des Schweißtransformators 39 fliessende pulsierende Gleichstrom erzeugt bei dem Stromübersetzungsverhältnis des Schweißtransformators 39 von 95 im Sekundärkreis dieses Transformators einen ebenfalls pulsierenden, im Mittel proportional der Funktion 31600A [(1-e$^{-t/14ms}$)-(1-e$^{-t/1400ms}$)] verlaufenden Gleichstrom, der anfangs linear mit der Zeit nach der Beziehung 2260A · t/ms ansteigt und etwa 50 ms nach dem Einschalten durch die Thyristorsteuerung 37 dann auf einen annähernd gleichbleibenden Wert von ca. 29000A übergeht. Mit dem Abschalten durch die Thyristorsteuerung 37 etwa 140 ms nach dem Einschalten fällt der Sekundärstrom dann aufgrund der Tatsache, daß die Thyristorsteuerung 37 die primärseitig angelegt pulsierende Gleichspannung im Moment des Abschaltens umpolt, außerordentlich rasch etwa linear mit der Zeit innerhalb von ca. 6,5 ms auf Null ab, wobei die Thyristorsteuerung 37 dann etwa beim Nulldurchgang des Sekundärstromes auch den Primärstrom des Schweißtransformators 39 oder genauer gesagt den der Parallelschaltung der Primärwicklung desselben mit einem zur Sicherung der Thyristoren gegen Überspannung vorgesehenen, in Fig. 14 nicht gezeigten Grundlastwiderstand unterbricht.

Der nach dem Einschalten durch die Thyristorsteuerung 37 im Sekundärkreis des Schweißtransformators 39 und damit durch die Schweißstelle hindurchfliessende Schweißstrom bewirkt in den ersten Millisekunden zunächst eine relativ starke lokale Erhitzung in dem Bereich, wo die beiden Bleche 23 und 24 bzw. 25 und 26 aufeinander aufliegen (also bei dem Ausführungsbeispiel in Fig. 1 im Auflagebereich 30 des Ringbuckels 29 und bei dem Ausführungsbeispiel in und 26), weil in diesem Bereich im Einschaltmoment nahezu der gesamte Widerstand der Schweißstelle konzentriert ist. Dieser relativ hohe Übergangswiderstand zwischen den beiden Blechen ist darauf zurückzuführen, daß die die unbehandelten Aluminiumbleche überdeckende Oxidschicht nur an einzelnen unregelmässig über die Blechoberfläche verteilten Inseln (die sich wahrscheinlich jeweils an Poren in der Oxidschicht befinden) stromleitend und in dem gesamten übringen Bereich entsprechend den guten Isolationseigenschaften von Aluminiumoxid nichtleitend ist und bei zwei aufeinander aufliegenden Blechen der größte Teil der in der Oxidschicht des einen Bleches befindlichen stromleitenden Inseln an den nichtleitenden Bereich der Oxidschicht des anderen Bleches angrenzt und nur ein kleiner Bruchteil der stromleitenden Inseln in der Oxidschicht des einen Bleches im Auflagebereich der beiden Bleche bzw. der beiden Oxidschichten derselben aufeinander auf eine stromleitende Insel in der Oxidschicht des anderen Bleches trifft (während demgegenüber im Auflagebereich einer Kupferelektrode auf der Oxidschicht eines unbehandelten Aluminiumbleches sämtliche stromleitenden Inseln in der Oxidschicht auf die stromleitende Kupferelektrode treffen und daher auch bei einer Schweißung unbehandelter Aluminiumbleche mit glatten, unprofilierien Elektroden im Einschaltmoment des Schweißstromes die Kontaktwiderstände Elektrode-Blech etwa 10- bis 100-mal kleiner als der Übergangswiderstand zwischen den beiden Blechen sind). Aufgrund des relativ hohen Übergangswiderstandes zwischen den beiden Blechen fällt auch nahezu die gesamte über der Schweißstelle liegende Spannung an diesem Übergangswiderstand ab, so daß das Metall der zu verschweißenden Bleche und natürlich auch dis Kontaktstellen Elektrode-Blech in der Anfangsphase unmittelbar nach dem Einschalten des Schweißstromes kalt bleiben und sich zunächst im wesentlichen nur diejenigen stromleitenden Inseln in den innenliegenden Oxidschichten der beiden Bleche erhitzen, über die eine stromleitende Verbindung zwischen den beiden Blechen besteht. Die Erhitzung dieser vom Einschaltmoment an stromführenden Inseln und der unmittelbar an dieselben angrenzenden Metallbereiche der Bleche auf die Schmelztemperatur von aluminium erfolgt innerhalb der ersten 200 Mikrosekunden nach dem Einschalten, und von da an beginnen sich diese Inseln (wahrscheinlich durch aus den angrenzenden Metallbereichen in die die Inseln umgebende Oxidschicht eindringendes geschmolzenes Metall) zunächst zu vergrößern und dann sukzessive auch diejenigen Inseln mit zu erfassen, die anfangs an nichtleitende Bereiche der jeweils anderen Oxidschicht angrenzten. Mit der Vergrößerung der stromführenden Inseln sinkt infolge des damit anwachsenden Stromflußquerschnittes der Übergangswiderstand ab, wobei sich jeweils bei sprungartiger Erhöhung des Stromflußquerschnittes durch Erfassung weiterer anfangs an nichtleitende Bereiche der jeweils anderen Oxidschicht angrenzender Inseln ein entsprechender sprungartiger Abfall des Übergangswiderstandes und damit ein entsprechendes sprunghaftes Absinken der über der Schweißstelle abfallenden Spannung ergibt. Da gleichzeitig der Schweißstrom, wie oben schon erwähnt, etwa linear mit der Zeit ansteigt, ergeben sich damit in dem Zeitabschnitt der Vergrößerung der stromführenden Inseln unregelmässige Schwankungen der Spannung über der Schweißstelle, die in einem den Spannungsverlauf über der Schweißstelle während der ersten 5 Millisekunden nach dem Einschalten aufzeichnenden Oszillogramm deutlich erkennbar sind. Sobald die sich vergrößernden stromführenden Inseln den gesamten Auflagebereich der beiden Bleche erfaßt haben, hören die unregelmäßigen Spannungsschwankungen mit einem

abschließenden steilen Abfall der Spannung, der den endgültigen Zusammenbruch des Übergangswiderstandes zwischen den beiden Blechen charakterisiert, und einem anschließenden Übergang der Spannung auf einen über mehrere Millisekunden nahezu konstant bleibenden Wert auf.

Da der Zusammenbruch des Übergangswiderstandes bereits 2 bis 3 Millisekunden nach dem Einschalten des Schweißstromes erfolgt und die Einschaltdauer des Schweißstromes im vorliegenden Fall bei 140 ms und im allgemeinen in der Größenordnung von 50 bis 150 ms liegt, kann man in der Praxis davon ausgehen, daß im wesentlichen während der gesamten Schweißdauer zwischen den beiden aufeinander aufliegenden, zu verschweißenden Blechen kein Übergangswiderstand vorhanden ist. Um dem Rechnung zu tragen, ist in der gesamten vorliegenden Beschreibung die Bezeichnung "Übergangswiderstand" nur an den Stellen verwendet worden, wo damit der Widerstand zwischen den beiden Blechen im stromlosen Zustand oder während der ersten 2 bis 3 ms nach dem Einschalten des Schweißstromes gemeint ist. In allen den Fällen hingegen, die sich auf den nach dem Zusammenbruch des Übergangswiderstandes folgenden Hauptteil der Schweißdauer beziehen, wurden im Unterschied dazu nur Bezeichnungen wie "Widerstandsanteil von Metall und innenliegenden Oxidschichten am Gesamtwiderstand der Schweißstelle" und ähnlichlautende Bezeichnungen verwendet. Ferner ist auch dann, wenn allgemein vom "Gesamtwiderstand der Schweißstelle" die Rede ist, in aller Regel - sofern nicht ausdrücklich etwas anderes erwähnt ist - der sich während de Hauptteiles der Schweißdauer und insbesondere bei Beginn desselben (also unmittelbar nach dem steilen Spannungsabfall beim endgültigen Zusammenbruch des Übergangswiderstandes) ergebende Gesamtwiderstand der Schweißstelle gemeint, weil der Gesamtwiderstand der Schweißstelle bei Beginn des Hauptteiles der Schweißdauer ziemlich genau der Summe der kalten Metall- und Kontaktwiderstände der Schweißstelle entspricht (der Gesamtwiderstand der Schweißstelle nimmt infolge des bei Beginn des Hauptteiles der Schweißdauer einsetzenden Aufschmelzens des Metalles der Bleche und der höheren Leitfähigkeit von geschmolzenem Metall im Verlaufe des Hauptteiles der Schweißdauer fortlaufend ab).

Vom Zusammenbruch des Übergangswiderstandes an verteilt sich die der Schweißstelle zugeführte Stromwärme im Verhältnis der Kontaktwiderstände zu dem vom Metall der zu verschweißenden Bleche gebildeten Widerstand auf die Kontaktstellen Elektrode-Blech und das Metall der Bleche, wobei infolge der gegenüber dem Metallwiderstand relativ geringen Kontaktwiderstände der größte Teil der zugeleiteten Stromwärme dem Metall zugeführt wird und der auf die Kontaktstellen entfallende relativ geringe Stromwärmeanteil zum großen Teil durch die Kühlung der an diesen anliegenden Elektroden wieder abgeführt wird. Allerdings wird den Kontaktstellen zusätzlich durch Wärmeleitung von der zentralen Aufschmelzzone her Wärme zugeführt, so daß mit dem nach dem Zusammenbruch des Übergangswiderstandes im gegenseitigen Auflagebereich der Bleche einsetzenden Aufschmelzen des Metalles der Bleche auch die Temperatur an den Kontaktstellen Elektrode-Blech und damit natürlich auch die Elektrodentemperaturen relativ rasch anzusteigen beginnen. Es kommt nun darauf an, daß die Temperatur an den Kontaktstellen Elektrode-Blech nicht die Anlegierungstemperatur erreicht, und zu diesem Zweck kann man entweder die Zeitdauer der Einschaltung durch die Thyristorsteuerung relativ kurz machen und mit relativ hohen Schweißströmen arbeiten, wobei dann das Aufschmelzen eines Teiles des Metalls und die Erweichung des restlichen Teiles des Metalls an der Schweißstelle relativ rasch vor sich geht und durch die Wärmeleitung in dieser kurzen Zeit nicht genügend Wärme zu den Kontaktstellen transportiert werden kann, um diese bis auf die Anlegierungstemperatur zu erhitzen, oder aber man kann, wie das bei den vorliegenden Ausführungsbeispielen erfolgt ist, die Zeitdauer der Einschaltung durch die Thyristorsteuerung relativ lang machen und mit relativ geringen Schweißströmen arbeiten, wobei dann zwar wegen der geringeren Stromwärmezufuhr pro Zeiteinheit das Aufschmelzen eines Teiles des Metalls und die Erweichung des restlichen Teiles des Metalls länger dauert und infolgedessen durch die Wärmeleitung auch ein größerer Anteil der insgesamt zugeführten Stromwärme zu den Kontaktstellen transportiert wird, gleichzeitig aber die den Kontaktstellen pro Zeiteinheit durch Wärmeleitung zugeführte Wärmemenge wegen der geringeren Stromwärmezufuhr pro Zeiteinheit bei etwa gleichbleibender Wärmeabfuhr pro Zeiteinheit abnimmt und sich daher die das Aufheizen der Kontaktstellen bewirkende Differenz zwischen Wärmezufuhr zu und Wärmeabfuhr von den Kontaktstellen pro Zeiteinheit so weit verringert, daß sie trotz der längeren Zeitdauer und der damit insgesamt größeren, zu den Kontaktstellen durch Wärmeleitung transportierten Wärmemenge nicht ausreicht, um die Kontaktstellen bis auf die Anlegierungstemperatur zu erhitzen. Die erstgenannte Verfahrensvariante mit kürzerer Einschaltdauer und höherem Schweißstrom ist bezüglich genauer Einstellung von Einschaltdauer und Schweißstrom etwas kritischer, führt aber dafür zu einer etwas geringeren Erweichung der äußeren Blechoberflächen an der Schweißstelle und ist aus diesem Grunde für das Punktschweißen entsprechend dem Ausführungsbeispiel in Fig. 2, wo mit balligen Elektroden gearbeitet wird und die Eindrückung derselben so gering wis möglich gehalten werden soll, etwas besser geeignet. Die letztgenannte Verfahrensvariante ist insbesondere hinsichtlich der Einstellung der Einschaltdauer relativ unkritisch, sie führt aber zu einer etwas stärkeren Erweichung der äußeren Blechoberflächen an der Schweißstelle und eignet sich daher mehr für das Buckelschweißen entsprechend dem Ausführungsbeispiel in Fig. 1, wo ja mit ebenen Elektroden gearbeitet wird und daher kalottenförmige Eindrückungen wie beim Arbeiten mit balligen Elektroden nicht zu befürchten sind. Bei beiden Verfahrensvarianten ergibt sich aber auf jeden Fall eine solche Erweichung der äußeren Blechoberflächen, daß die Elektroden 1 und 2 bzw. 3 und 4 weiter in die Blechoberflächen 16 und 17 bzw. 18 und 19 einsinken, und zwar im zentralen Bereich der Schweißstelle bis auf etwa die Nuttiefe der spiralförmigen Nuten 9 und 10 bzw. 11 und 12, wie dies an dem in Fig. 13 gezeigten Querschliff durch eine nach dem vorliegenden Verfahren hergestellte Schweißstelle deutlich ersichtlich ist.

Da nach dem Abschalten durch die Thyristorsteuerung 37 bzw. genauer gesagt nach dem erwähnten Umpolen der primärseitig an den Schweißtransformator 39 angelegten pulsierenden Gleichspannung im Schweißstromkreis bzw. im Sekundärkreis des Schweißtransformators 39 noch über die sogenannte Abklingzeit, also mindestens über die obengenannten 6,5 ms, noch Schweißstrom fließt, muß die auf die bewegbare Elektrode 1 bzw. 3 wirkende Preßkraft auch nach dem Abschalten durch die Thyristorsteuerung 37 noch aufrechterhalten werden. Dieses sogenannte Nachpressen ist aber nicht nur wegen des auch nach dem Abschalten noch über die Abklingzeit fließenden Schweißstromes erforderlich, sondern das Nachpressen ist auch in anderer Hinsicht von wesentlicher Bedeutung: Bei der Abkühlung der sich an der Schweißstelle aus dem geschmolzenen Metall durch Rekristallisation bildenden Schweißlinse ergeben sich nämlich im Inneren der Linse infolge der Zusammenziehung des sich abkühlenden Metalles auf den Linsenrand zu gerichtete Spannungen, die vor der Rekristallisation im Linsenkern zu Lunkern und im bereits rekristallisierten Linsenkern zu Rissen führen können, und dieser Lunker- und Rißbildung kann bekanntlich durch Nachpressen entgegengewirkt werden, weil der durch das Nachpressen ausgeübte Druck auf die Schweißlinse bei genügend hoher Nachpreßkraft zu einem Zusammenpressen und damit zu einer die genannten Spannungen aufhebenden Volumenverminderung der Schweißlinse führt. Daher wird die auf die bewegbare Elektrode 1 bzw. 3 wirkende Preßkraft in gleicher Höhe über eine Nachpreßzeit von ca. 0,2 sec aufrechterhalten. Nach Ablauf der Nachpreßzeit wird dann die Preßkraft mit Hilfe der genannten pneumatischen Mittel wieder aufgehoben und dis Elektrode von der Schweißstelle abgehoben, woraufhin dann die verschweißten Bleche 23, 24 bzw. 25, 26 aus der Schweißmaschine entnommen werden können.

Den Zustand der den Elektroden zugewandten Seiten der Bleche nach Beendigung der Schweißung zeigen für das Ausführungsbeispiel in Fig. 1 die Figuren 10 und 12, und zwar die Fig. 10 den Zustand der Seite 16 des Bleches 23 und die Fig. 12 den Zustand der Seite 17 des Bleches 24. Ein Vergleich dieser Figuren 10 und 12 mit den entsprechenden, den Zustand nach dem Vorpressen und vor der Stromeinschaltung zeigenden Figuren 9 und 11 verdeutlicht das obenerwähnte weitere Einsinken der Elektroden 1 und 2 in die Blechoberflächen 16 und 17 während der Einschaltdauer der Thyristorsteuerung 37 sowie der anschließenden Nachpreßzeit, das sich durch die wesentlich größere Anzahl von eingedrückten Spiralringen dokumentiert. Bei dem Ausführungsbeispiel in Fig. 2 entspricht der Zustand der den Elektroden zugewandten Seiten der Bleche 25 und 26 nach Beendigung der Schweißung etwa der Figur 12 ohne die in dieser Figur äußeren 7 Spiralringe.

Die Scherzugbeanspruchbarkeit von nach dem vorliegenden Verfahren hergestellten Schweißverbindungen unbehandelter Aluminiumbleche zeigt das Diagramm in Fig. 8, in dem für mehrere Serien von jeweils ohne Zwischenbehandlung der Elektroden nacheinander vorgenommenen Schweißungen die gemessene Scherbruchkraft p über der bis zur Schweissung des jeweiligen Messobjektes vorgenommenen Anzahl von Schweißungen n aufgetragen ist. Wie aus dieser Fig. 8 ersichtlich liegen die Scherbruchkräfte von nach dem vorliegenden Verfahren hergestellten Schweißverbindungen mit im Mittel ca. 250 daN weit über dem für Punktschweissverbindungen von Aluminiumblechen in der Flugzeugindustrie für Luftfahrttauglichkeit geforderten Mittelwert von 173 daN (gestrichelte Linie 40 in Fig.8) und zeigen nur einen relativ geringen Abfall von im Mittel ca. 15 daN über der gesamten Elektrodenstandzeit von 1500 Schweißungen. Auch die Streuung der Scherbruchkräfte von nach dem vorliegenden Verfahren hergestellten Schweißverbindungen ist, wie die Fig. 8 zeigt, relativ gering und beträgt unter Einbeziehung des Abfalles über der Elektrodenstandzeit nur ca. 40 daN, wobei der Streubereich zwischen 230 und 270 daN liegt. Den Zustand der Elektrodenkontaktflächen nach Ablauf der halben Elektrodenstandzeit zeigen für das Ausführungsbeispiel in Fig. 1 die Figuren 4 und 6, und zwar die Fig. 4 den Zustand der Kontaktfläche 5 der Elektrode 1 und die Fig. 6 den Zustand der Kontaktfläche 6 der Elektrode 2. Wie ersichtlich sind außer einer leichten Graufärbung im Buckelbereich bei der in Fig. 4 gezeigten Kontaktfläche 5 der Elektrode 1 bei beiden in den Figuren 4 und 6 gezeigten Elektrodenkontaktflächen kaum Spuren der großen Anzahl von Schweißungen zu erkennen, die mit diesen Elektroden ohne Zwischenbehandlung bereits durchgeführt wurden. Im Gegenteil glänzen diese Elektrodenkontaktflächen in den an die erhabenen Bereiche angrenzenden Nutenwandbereichen, mit denen sie im Betrieb an unoxidiertem Werkstückmaterial anliegen, sogar wie poliert. Demgegenüber sehen unter den gleichen Betriebsbedingungen anstelle der profilierten Elektroden eingesetzte ebene Elektroden nach nur sechs Schweißungen von unbehandelten Aluminiumblechen entsprechend dem Ausführungsbeispiel in Fig. 1 wie in den Figuren 5 und 7 aus, d.h. die buckelseitige Elektrode weist, wie in Fig. 5 ersichtlich, im Buckelbereich bereits Anlegierungen auf und die flachblechseitige Elektrode hat, wie die Fig. 7 zeigt, im gleichen Bereich schon eine starke, in Kürze zu Anlegierungen führende Graufärbung. Ein Vergleich der Figuren 5 und 7 mit den Figuren 4 und 6 zwigt daher augenfällig die Überlegenheit des vorliegenden Verfahrens gegenüber den bekannten Aluminiumpreßschweißverfahren.

**Patentansprüche**

1. Elektrisches Widerstandspreßschweißverfahren zum Verschweißen von aus Aluminium und/oder dessen Legierungen bestehenden Werkstückteilen (23, 24; 25, 26) mit Hilfe eines über Elektroden (1, 2; 3, 4) zugeführten Schweißstromes, bei welchem die Werkstückteile (23, 24; 25, 26) vor Einschalten des Schweißstromes vorgepreßt werden und während des Stromflusses durch elastische Elektrodennachführung stetig ein auf die Werkstückteile (23, 24; 25, 26) wirkender Preßdruck aufrechterhalten wird, dadurch gekennzeichnet, daß Elektroden (1, 2; 3, 4) verwendet werden, von denen mindestens eine an ihrer Kontaktfläche (5, 6; 7, 8) durch Kanten (20) begrenzte Nuten (9, 10; 11, 12) von dreieckigem oder trapezförmigem Querschnitt und einem Kantenwinkel von 120° bis 150° zwischen den Nutwandflächen (22) und der Ebene der Kontaktfläche (5, 6; 7, 8) aufweist, und daß die an dieser Kontaktfläche (5, 6; 7, 8) anliegende Werkstückseite (16, 17; 18, 19) während des Vorpreßens und vor dem Einschalten des Schweißstromes derart plastisch verformt wird, daß die an den Kanten (20) reißende oberflächliche Aluminiumoxidschicht abgeschält wird und freigelegtes, im wesentlichen unoxidiertes Werkstückmaterial (21) auf einer so großen Kontaktfläche (21/22) in unmittelbaren, unter Preßdruck stehenden Kontakt mit den Nutwandflächen (22) der Elektrode gebracht wird, daß dadurch unmittelbar beim Einschalten des Schweißstromes der Kontaktwiderstand zwischen der Elektrode (1; 2) und dem Werkstückteil kleiner ist als der vom Metall der zu verschweißenden Werkstückteile (23, 24; 25, 26) gebildete Widerstandsanteil am Gesamtwiderstand der Schweißstelle.

2. Verfahren nach Anspruch 1, dadurch gekennzeichnet, daß die den Elektroden (1, 2; 3, 4) zugewandten Werkstückseiten (16, 17; 18, 19) beim Vorpreßen so weit plastisch verformt werden, daß der Kontaktwiderstand zwischen Elektrode (1, 2; 3, 4) und Werkstückteil (23, 24; 25, 26) beim Einschalten des Schweißstromes weniger als 30 %, vorzugsweise weniger als 20 %, des sich unmittelbar nach Zusammenbruch des Übergangswiderstandes zwischen den Werkstückteilen (23, 24; 25, 26) ergebenden Gesamtwiderstandes der Schweißstelle beträgt.

3. Verfahren nach Anspruch 2, gekennzeichnet durch eine so weitgehende plastische Verformung, daß der Kontaktwiderstand zwischen Elektrode (1, 2; 3, 4) und Werkstückteil (23, 24; 25, 26) beim Einschalten des Schweißstromes weniger als 10 % des Gesamtwiderstandes beträgt.

4. Verfahren nach einem der Ansprüche 1 bis 3, dadurch gekennzeichnet, daß die den Elektroden (1, 2; 3, 4) zugewandten Werkstückseiten (16, 17; 18, 19) beim Vorpreßen so weit plastisch verformt werden, daß der Übergangswiderstand zwischen den zu verschweißenden Werkstückteilen (23, 24; 25, 26) beim Einschalten des Schweißstromes über 90 %, vorzugsweise zwischen 92 und 98 %, des Gesamtwiderstandes der Schweißstelle vor dem Einschalten des Schweißstromes beträgt.

5. Verfahren nach einem der Ansprüche 1 bis 4, dadurch gekennzeichnet, daß Elektroden (1, 2; 3, 4) mit erhabenen Bereichen aus einer Kupferlegierung mit Legierungsanteilen aus der die Stoffe Chrom, Zirkon, Cadmium, Beryllium, Nickel, Silizium, Mangan und Eisen umfassenden Gruppe und mit mindestens dreimal so hoher 0,2-Dehngrenze wie der von reinem Weichkupfer sowie mit mindestens 75 % der elektrischen Leitfähigkeit desselben verwendet werden.

6. Elektrische Widerstandspreßschweißeinrichtung zum Verschweißen von aus Aluminium und/oder dessen Legierungen bestehenden Werkstückteilen (23, 24; 25, 26) mit Elektroden (1, 2; 3, 4) zum Zuführen von Schweißstrom zu den Werkstückteilen, Mitteln zum Einschalten des Schweißstromes und Mitteln zum Vorpreßen der Werkstückteile (23, 24; 25, 26) vor dem Einschalten des Schweißstromes sowie zur stetigen Aufrechterhaltung eines auf die Werkstückteile wirkenden Preßdruckes während des Stromflusses durch elastische Elektrodennachführung, dadurch gekennzeichnet, daß mindestens eine der Elektroden (1, 2; 3, 4) an ihrer Kontaktfläche (5, 6; 7, 8) durch Kanten (20) begrenzte Nuten (9, 10; 11, 12) von dreieckigem oder trapezförmigem Querschnitt und einem Kantenwinkel von 120° bis 150° zwischen den Nutwandflächen (22) und der Ebene der Kontaktfläche (5, 6; 7, 8) zur plastischen Verformung der ihr zugewandten Werkstückseite (16, 17; 18, 19) während des Vorpreßens aufweist, und daß die Mittel (37) zum Einschalten des Schweißstromes derart gesteuert sind, daß dieser erst eingeschaltet wird, wenn der Kontaktwiderstand zwischen der Elektrode (1; 2) und dem Werkstückteil kleiner als der vom Metall der zu verschweißenden Werkstückteile (23, 24; 25, 26) gebildete Widerstandsanteil am Gesamtwiderstand der Schweißstelle ist.

7. Einrichtung nach Anspruch 6, dadurch gekennzeichnet, daß die an mindestens einer der Elektrodenkontaktflächen (5, 6; 7, 8) ausgebildeten Nuten (9, 10; 11, 12) spiralförmig oder kenzentrisch kreisförmig sind.

8. Einrichtung nach Anspruch 6 oder 7, dadurch gekennzeichnet, daß die Mittel zum Einschalten des Schweißstromes eine mit Phasenanschnittssteuerung arbeitende und somit stromlose Zwischenzeiten für die Vorwärtsbewegung und das sich damit ergebende Vorpreßen der Werkstückteile freihaltende Thyristorsteuerung umfassen.

9. Einrichtung nach einem der Ansprüche 6 bis 8, dadurch gekennzeichnet, daß die Elektroden (1, 2; 3, 4) aus einer Kupferlegierung mit Legierungsanteilen aus der die Stoffe Chrom, Zirkon, Cadmium, Beryllium, Nickel, Silizium, Mangan und Eisen umfassenden Gruppe und mit mindestens dreimal so hoher 0,2-Dehngrenze wie der von reinem Weichkupfer sowie mit mindestens 75 % der elektrischen Leitfähigkeit desselben bestehen.

## Claims

1. An electric resistance pressure welding process for welding workpiece parts (23, 24; 25, 26) consisting of alumimium and/or its alloys by means of a welding current supplied via electrodes (1, 2; 3, 4), wherein the workpiece parts (23, 24; 25, 26) are prepressed before the welding current is switched on and a pressing force acting on the workpiece parts (23, 24; 25, 26) is maintained continuously by resilient electrode follow-up during the flow of current, characterised in that electrodes (1, 2; 3, 4) are used of which at least one comprises, on its contact surface (5, 6; 7, 8), grooves (9, 10; 11, 12) of triangular or trapezoidal cross-section which are bounded by edges (20) and have an edge angle of 120° to 150° between the surfaces (22) of the groove walls and the plane of the contact surface (5, 6; 7, 8), and that the side (16, 17; 18, 19) of the workpiece bearing against this contact surface (5, 6; 7, 8) is plastically deformed during the prepressing and before the welding current is switched on, in such a manner that the surface layer of aluminium oxide tearing at the edges (20) is peeled off and exposed, substantially unoxidized workpiece material (21) is brought into direct contact, by effect of pressure, with the wall surfaces (22) of the grooves over such a large contact area (21/22) that, as a result, as soon as the welding current is switched on, the contact resistance between the electrode (1; 2) and the workpiece part is less than the proportion of the resistance formed by the metal of the workpiece parts (23, 24; 25, 26) to be welded in the total resistance of the welding area.

2. A process according to Claim 1, characterised in that the sides (16, 17; 18, 19) of the workpieces adjacent to the electrodes (1, 2; 3, 4) are plastically deformed during the prepressing to such an extent that, when the welding current is switched on, the contact resistance between electrode (1, 2; 3, 4) and workpiece part (23, 24; 25, 26) is less than 30 %, preferably less than 20 %, of the total resistance of the welding area resulting immediately after the breakdown of the contact resistance between the workpiece parts (23, 24; 25, 26).

3. A process according to Claim 2, characterised by such an extensive plastic deformation that the contact resistance between electrode (1, 2; 3, 4) and workpiece part (23, 24; 25, 26) is less than 10 % of the total resistance when the welding current is switched on.

4. A process according to one of the Claims 1 to 3, characterised in that the sides (16, 17; 18, 19) of the workpieces adjacent to the electrodes (1, 2; 3, 4) are plastically deformed during the prepressing to such an extent that the transfer resistance between the workpiece parts (23, 24; 25, 26) to be welded amounts, when the welding current is switched on, to over 90°, preferably between 92 and 98°, of the total resistance of the welding area before the welding current is switched on.

5. A process according to any one of Claims 1 to 4, characterised in that electrodes (1, 2; 3, 4) are used having raised regions of a copper alloy with alloying components from the group comprising the substances chromium, zirconium, cadmium, beryllium, nickel, silicon, manganese and iron and having a yield strength which is at least three times as high as that of pure soft copper and having at least 75 % of the electrical conductivity thereof.

6. An electrical resistance pressure welding device for welding workpiece parts (23, 24; 25, 26) consisting of aluminium and/or its alloye, having electrodes (1, 2; 3, 4) for supplying welding current to the workpiece parts, means for switching on the welding current and means for prepressing the workpiece parts (23, 24; 25, 26) before the welding current is swiched on and for continuously maintaining a pressing force acting on the workpiece parts during the flow of current by resilient electrode follow-up, characterised in that at least one of the electrodes (1, 2; 3, 4) comprises, at its contact surface (5, 6; 7, 8), grooves (9, 10; 11, 12) of triangular or trapezoidal cross-section which are bounded by edges (20) and have an edge angle of 120° to 150° between the wall surfaces (22) of the grooves and the plane of the contact surface (5, 6; 7, 8) for the plastic deformation of the side (16, 17; 18, 19) of the workpiece adjacent thereto, during the prepressing, and in that means (37) for switching on the welding current are controlled in such a manner that this is only switched on when the contact resistance between the electrode (1; 2) and the workpiece part is lower than the proportion of the resistance formed by the metal of the workpiece parts (23, 24; 25, 26) to be welded, in the total resistance of the welding area.

7. A device according to Claim 6, characterised in that the grooves (9, 10; 11, 12) formed at least at one of the contact surfaces (5, 6; 7, 8) of the electrodes are spiral or concentrically circular in shape.

8. A device according to Claim 6 or 7, characterised in that the means for switching on the welding current comprise a thyristor control working with phase control and thus keeping currentless intervals free for the forward movement and the resulting prepressing of the workpiece parts.

9. A device according to any one of Claims 5 to 8, characterised in that the electrodes (1, 2; 3, 4) consist of a copper alloy with alloying components from the group comprising the substances chromium, zirconium, cadmium, beryllium, nickel, silicon, manganese and iron and having a proof stress rp 0,2 which is at least three times as high as that of pure soft copper and having at least 75 % of the electrical conductivity thereof.

**Revendications**

1. Procédé de soudage électrique par résistance pour le soudage de parties (23, 24; 25, 26) de pièces à traiter réalisées en aluminium et/ou des alliages de l'aluminium, à l'aide d'un courant de soudage envoyé par l'intermédiaire d'électrodes (1, 2; 3, 4), et selon lequel on applique une précompression aux parties (23, 24; 25, 26) des pièces à traiter avant l'application du courant de soudage et on maintient en permanence une pression de compression agissant sur les parties (23, 24; 25, 26) des pièces à traiter, pendant la circulation du flux de courant, grâce à un dispositif d'asservissement élastique des électrodes, caractérisé en ce qu'on utilise des électrodes (1, 2; 3, 4), dont l'une au moins possède, sur sa surface de contact (5, 6; 7, 8), des gorges (9, 10; 11, 12) limitées par des arêtes (20) et possédant une section transversale triangulaire ou trapézoïdale, avec un angle compris entre 120° et 150° entre les surfaces (22) des parois des gorges et le plan de la surface de contact (5, 6; 7, 8), et que la face (16, 17; 18, 19) des pièces à traiter, qui est appliquée contre cette surface de contact (5, 6; 7, 8) , est déformée plastiquement pendant la précompression et avant le branchement du courant de soudage de telle sorte que la couche superficielle d'oxyde d'aluminium qui se rompt au niveau des bords (20), se décolle et qu'un matériau nu et sensiblement non oxydé (21) des pièces à traiter est placé en contact direct, établi avec la pression de compression, avec les surfaces (22) des parois des gorges de l'électrode, sur une surface de contact (21/22) suffisamment étendue pour que de ce fait, dès le branchement du courant de soudage, la résistance de contact entre l'électrode (1; 2) et la partie de la pièce à traiter soit inférieure à la résistance formée par le métal des parties (23, 24; 25, 26) des pièces à traiter devant être soudées et intervenant dans la résistance globale de la zone de soudage.

2. Procédé selon la revendication 1, caractérisé en ce que lors de la précompression, les faces (16, 17; 18, 19) des pièces à traiter, tournées vers les électrodes (1, 2; 3, 4), sont déformées plastiquement au point que la résistance de contact entre l'électrode (1, 2; 3, 4) et la partie (23, 24; 25, 26) de la pièce à traiter lors du branchement du courant de soudage est inférieure à 30 % et de préférence inférieure à 20 % de la résistance totale de la zone de soudage, qu'on obtient directement après la suppression de la résistance de jonction entre les parties (23, 24; 25, 26) de pièces à traiter.

3. Procédé selon la revendication 2, caractérisé par une déformation plastique suffisamment importante pour que la résistance de contact entre l'électrode (1, 2; 3, 4) et la partie (23, 24; 25, 26) de la pièce à traiter soit inférieure, lors du branchement du courant de soudage, à 10 % de la résistance totale.

4. Procédé selon l'une des revendications 1 à 3, caractérisé en ce que lors de la précompression les faces (16, 17, 18, 19) des pièces à traiter, tournées vers les électrodes (1, 2; 3, 4) sont déformées plastiquement au point que la résistance de jonction entre les parties (23, 24; 25, 26) des pièces à traiter, devant être soudées, est égale, lors du branchement du courant de soudage, à plus de 90 % et de préférence entre 92 et 98 % de la résistance totale de la zone de soudage avant le branchement du courant de soudage.

5. Procédé selon l'une des revendications 1 à 4, caractérisé en ce qu'on utilise des électrodes (1, 2; 3, 4) possédant des zones surélevées formées par un alliage de cuivre ayant des composants provenant du groupe incluant les substances: chrome, zircon , cadmium, béryllium, nickel, silicium, manganèse et fer, et possédant au moins une limite d'élasticité à 0,2 % trois fois supérieure à celle du cuivre mou pur et une conductivité électrique égale à au moins 75 % de celle de ce matériau.

6. Dispositif de soudage électrique par résistance pour le soudage de parties (23, 24; 25, 26) de pièces à traiter constituées par de l'aluminium et/ou des alliages de ce dernier, à l'aide d'électrodes (1, 2; 3, 4) servant à amener le courant de soudage aux parties des pièces à traiter, des moyens pour brancher le courant de soudage et des moyens pour réaliser la précompression des parties (23, 24; 25, 26) des pièces à traiter avant le branchement du courant de soudage ainsi que pour maintenir en permanence une pression de compression agissant sur les parties des pièces à traiter, pendant l'envoi du flux de courant, au moyen d'un dispositif d'asservissement élastique des électrodes, caractérisé en ce qu'au moins l'une des électrodes (1, 2; 3, 4) comporte, dans sa surface de contact (5, 6; 7, 8), des gorges (9, 10; 11, 12) délimitées par des arêtes (20) et possédant une section transversale triangulaire ou trapézoïdale, avec un angle compris entre 120° et 150° entre les surfaces (22) des parois des gorges et le plan de la surface de contact (5, 6; 7, 8), pour réaliser la déformation plastique de la face (16, 17; 18, 19) des pièces à traiter, tournée vers cette surface, pendant l'opération de précompression, et que les moyens (37) servant à brancher le courant de soudage sont commandés de telle sorte que ce courant n'est branché que lorsque la résistance de contact entre l'électrode (1, 2) et la partie de la pièce à traiter est inférieure à la résistance formée par le métal des parties (23, 24; 25, 26) des pièces à traiter, devant être soudées et intervenant dans la résistance globale de la zone soudée.

7. Dispositif selon la revendication 6, caractérisé en ce que les gorges (9, 10; 11, 12) formées dans au moins l'une des surfaces de contact (5, 6; 7, 8) des électrodes, possèdent la forme de spirales ou de cercles concentriques.

8. Dispositif selon la revendication 6 ou 7, caractérisé en ce que les moyens servant à brancher le courant de soudage comportent un dispositif de commande à thyristors travaillant avec une commande de découpage de phase et libérant par conséquent des intervalles de temps intercalaires sans alimentation en courant, pour l'avance et la précompression, obtenue de ce fait, des pièces à traiter.

9. Dispositif selon l'une des revendications 5 à 8, caractérisé en ce que les électrodes (1, 2; 3, 4) sont constituées par un alliage de cuivre comportant des composants tirés du groupe incluant les substances: chrome, zircon, cadmium, béryllium, nickel, silicium, manganèse et fer, et poossédant une limite d'élasticité to 0,2 égale au moins au triple de celle du cuivre mou pur, ainsi qu'une conductivité électrique égale à au moins 75 % de celle de ce matériau.

*Fig. 1*

*Fig. 3*

*Fig. 2*

0 088 231

Fig. 14

Fig. 8

P/daN

Fig. 5

Fig. 7

Fig. 4

Fig. 6

3

Fig. 9

Fig. 10

Fig. 11

Fig. 12

Fig. 13